# EUROPEAN PATENT APPLICATION

(11) **EP 3 103 910 A1**
(43) Date of publication of application: **14.12.2016**
(21) Application number: 14879443.1
(22) Date of filing: 26.12.2014
(51) Int. Cl.: D06F 37/40, D06F 37/30

(54) **WASHING MACHINE DECELERATING CLUTCH AND WASHING MACHINE**

(30) Priority: 22.01.2014 CN 201410030094; 22.01.2014 CN 201410029462; 22.01.2014 CN 201410030104
(71) Applicant: Haier Group Corporation, Qingdao, Shandong 266101 (CN); Qingdao Haier Washing Machine Co., Ltd., Qingdao, Shandong 266101 (CN)
(72) Inventor: LV, Peishi, Qingdao Shandong 266101 (CN); YANG, Lin, Qingdao Shandong 266101 (CN); ZHANG, Gangjin, Qingdao Shandong 266101 (CN); IMAI, Shunji, Qingdao Shandong 266101 (CN)
(74) Representative: Zacco Sweden AB
(86) International application number: PCT/CN2014/095102
(87) International publication number: WO 2015/109915

(57) **Abstract**

The present disclosure discloses a washing machine decelerating clutch and a washing machine. The decelerating clutch includes: an input shaft (1), an input shaft sleeve (2), an output shaft (13), an output shaft sleeve (12), a gear case (5), and a gear mechanism that is disposed in the gear case (5); the input shaft sleeve (2) sleeves on the input shaft (1); the input shaft (1), the input shaft sleeve (2), and the output shaft (3) are connected to the gear mechanism; the output shaft sleeve (12) is fixedly connected to the gear case (5); and the gear case (5) is connected to the gear mechanism. The washing machine includes: an inner drum, an impeller for stirring laundry in the inner drum, a gear case (5) in which a gear mechanism is disposed, and a driving device for providing power to the inner drum and the impeller; the inner drum and the impeller rotate in opposite directions to each other under driving of the driving device to stir laundry; the gear case (5) is connected to the inner drum and transmits a driving force of the driving device to the inner drum; and the gear mechanism in the gear case (5) is connected to the impeller and transmits a driving force of the driving device to the impeller. The above washing machine decelerating clutch has features of simple and compact structure, safe and high efficient transmission, long service life, and low noise.

## Description

### Technical Field

The present disclosure relates to the field of washing machines, and in particular to a washing machine decelerating clutch and a washing machine.

### Background

Currently, a general function of a decelerating clutch of an impeller type washing machine is to perform deceleration on bidirectional rotation of a motor to drive an impeller to perform a reciprocating rotation. A conventional decelerating clutch is mainly composed of an input shaft, an output shaft, an output shaft sleeve, an input shaft sleeve, a brake wheel, a decelerating mechanism mounted inside the brake wheel, and a clutch component mounted on the input shaft sleeve. In a washing mode, the output shaft is required to repeatedly rotate bidirectionally at a low speed; the output shaft sleeve and the brake wheel are regarded as a whole; the decelerating mechanism generally functioned to decelerate only; and the output shaft sleeve is braked when the brake wheel is braked, so that a bidirectional rotation of the drive motor can only drive the output shaft to correspondingly rotate bidirectionally.

For an existing mutual-rubbing type decelerating clutch, no change happens to a decelerating mechanism inside the mutual-rubbing type decelerating clutch, and only a clutch control mechanism is changed, that is, a conventional single ratchet and a conventional single detent are replaced by two ratchets and two detents. In a washing mode, a brake wheel is preliminarily released (not completely released until dewatering); a drive motor rotates bidirectionally to drive an output shaft to correspondingly rotate bidirectionally; meanwhile, because an output shaft sleeve is not braked, the output shaft sleeve is subjected to a counterforce of a water flow when the output shaft rotates, so as to correspondingly rotate in a direction opposite to that of the output shaft, and a rotational angle of the output shaft sleeve is very small; moreover, because a resistance from clothing changes, a rotational speed and a swing of the output shaft sleeve change at any time, and are unstable. Although a mutual-rubbing phenomenon is caused, an ideal washing effect is not achieved. In addition, a brake band is in linkage with a control mechanism of the two detents, and the two detents are not allowed to leave the ratchets during washing (not allowed to leave until dewatering), so that the brake band is only released preliminarily, and separation is not thorough during washing, which increases friction and wear of the brake band and results in higher requirements on shaping and adjustment of the brake band. In a dewatering mode, the output shaft and the output shaft sleeve as a whole are required to rotate in one direction at a high speed, so as to achieve an objective of centrifugal dewatering. For switching between a washing mode and a dewatering mode, the conventional decelerating clutch has to be provided with a set of clutch components such as a ratchet, a detent, a detent spring, a clutch spring, a clutch sleeve, and an adjustment bolt, but the conventional decelerating clutch itself does not have a function of automatic clutch switching, but needs to be controlled by an external traction motor to enable the clutch spring to exert a clutch effect; and only in this way, the switching between the washing mode and the dewatering mode can be performed. Both an electronic control system and a clutch control system of the conventional decelerating clutch are relatively complex, wear is increased, an actuation force of a brake lever is increased, and service lives of related components are directly affected.

For an improved mutual-rubbing type decelerating clutch, a decelerating mechanism driven bidirectionally is adopted, the decelerating mechanism outputs rotation of a motor as two rotations having opposite rotation directions and different speeds, so as to drive an impeller and an inner drum respectively to rotate in opposite directions to each other in different speeds, thereby exerting an effect of performing mutual-rubbing type washing on clothing. An existing washing machine decelerating clutch driven bidirectionally generally adopts a planetary fixed-axis gear train transmission structure, a geared transmission structure, and a movable-tooth transmission structure. General gear transmission is loud in noise during bidirectional transmission of forward and reverse directions, and the movable-tooth transmission structure is relatively high in manufacturing cost, therefore the planetary fixed-axis gear train transmission structure is widely applied.

A Chinese patent with application No. 03239381.4 discloses a washing machine full-automatic decelerating clutch , and the full-automatic decelerating clutch is mainly composed of an input shaft, an output shaft, an output shaft sleeve, an input shaft sleeve, a brake wheel, and a dual-drive gear mechanism mounted inside the brake wheel. The input shaft, the output shaft sleeve, and the output shaft are connected to the dual-drive gear mechanism, and a clutch device is mounted between the brake wheel and the output shaft sleeve. In a washing mode, the output shaft and the output shaft sleeve perform driving bidirectionally in proportion in opposite directions to each other to swing and rotate repeatedly, so as to perform powerful mutual rubbing and swinging regarding each other. In a dewatering mode, a locking effect of the clutch device can enable the output shaft and the output shaft sleeve to automatically combine, and meanwhile perform high-speed continuous rotation in one direction, to perform centrifugal dewatering.

However, when the washing machine with the foregoing decelerating clutch is in the washing mode, an inner drum and an impeller operate in opposite directions to each other frequently, and a moment of inertia caused by the inner drum directly acts on an overrunning clutch. However, with increasement of a washing capacity of the washing machine, a quality problem often occurs due to a faulty overrunning clutch. During rotation of the inner drum, a reverse force is often caused to a one-way bearing, so that the one-way bearing is likely to fail; and meanwhile, a clutch spring performs tight holding during washing, which damages the clutch spring. Moreover, the output shaft sleeve is separated from the brake wheel, and is connected to a speed reducer, a swing occurs in the dewatering state of the inner drum, and the swing directly acts on the output shaft sleeve, causing the washing machine to vibrate violently so that a noise is caused since a degree of eccentricity of the output shaft sleeve is relatively large.

In view of this, the present disclosure is provided.

### Summary

The technical problem to be solved by the present disclosure is to eliminate defects in the related art by providing a washing machine decelerating clutch which is simple and compact in structure, low in manufacturing cost, safe and reliable in transmission, high in efficiency, long in service life, and low in noise.

Another objective of the present disclosure is to provide a washing machine including the decelerating clutch.

To solve the foregoing technical problem, the basic idea of a technical solution adopted by the present disclosure relates to: a washing machine decelerating clutch, including an input shaft, an input shaft sleeve, a gear case, a gear mechanism, an output shaft sleeve, an output shaft, a lower housing, and a clutch device; where the input shaft sleeve sleeves on the input shaft; the output shaft sleeve sleeves on the output shaft; the gear mechanism is mounted in an inner cavity of the gear case; the output shaft sleeve and the gear case are connected as a whole; the input shaft, the input shaft sleeve, the gear case, and the output shaft are connected to the gear mechanism; the gear mechanism is composed of a first gear mechanism and a second gear mechanism; the first gear mechanism is a decelerating transmission chain between the input shaft and the output shaft; the second gear mechanism is a decelerating transmission chain with an opposite rotational direction between the output shaft and the gear case, the output shaft sleeve; the input shaft sleeve and a gear carrier of the second gear mechanism are connected as a whole; and the clutch device includes a positioning plate fixedly mounted on the lower housing, a torque transmission sleeve fixedly mounted on the input shaft, a clutch component that is mounted on the input shaft sleeve and is capable of being connected to/disconnected from the positioning plate and the torque transmission sleeve separately, and a clutch control mechanism that controls the clutch component to be connected to/disconnected from the positioning plate and the torque transmission sleeve.

Further, the output shaft is connected to the input shaft in a transmission way by means of the first gear mechanism, and the output shaft sleeve is connected to the output shaft in a transmission way by means of the gear case and the second gear mechanism.

Further, the first gear mechanism is mainly composed of a first sun gear, first planetary gear shafts, first planetary gears, a first inner tooth ring, and a first gear carrier; the first sun gear is mounted on the input shaft; the first inner tooth ring is disposed in the inner cavity of the gear case; the first planetary gears and the first planetary gear shafts movably fit, and are evenly distributed on a same circumference of the first gear carrier; the first planetary gears engage with both the first sun gear and the first inner tooth ring; and the output shaft is connected to the first gear carrier.

Further, the second gear mechanism is mainly composed of a second sun gear, second planetary gear shafts, second planetary gears, a second inner tooth ring, and a second gear carrier; the second inner tooth ring is fixedly mounted in the inner cavity of the gear case; the second sun gear is fixedly mounted on the output shaft; the second planetary gears and the second planetary gear shafts movably fit and are evenly distributed on a same circumference of the second gear carrier; the second planetary gears engage with both the second inner tooth ring and the second sun gear; and the input shaft sleeve is connected to the second gear carrier.

Further, the input shaft sleeve and the second gear carrier are connected as a whole by means of the first inner tooth ring, and the first gear carrier and the output shaft are connected as a whole by means of the second sun gear.

Further, the input shaft is connected to the first gear mechanism; the input shaft sleeve is connected to the second gear mechanism by means of the first gear mechanism; the output shaft is connected to the second gear mechanism; and the second gear mechanism is connected to the first gear mechanism in a transmission way.

Further, the first gear mechanism is mainly composed of a first sun gear, first planetary gear shafts, first planetary gears, a first inner tooth ring, and a first gear carrier; the first sun gear is mounted on the input shaft; the first inner tooth ring is disposed in the inner cavity of the gear case; the first planetary gears and the first planetary gear shafts movably fit, and are evenly distributed on a same circumference of the first gear carrier; the first planetary gears engage with both the first sun gear and the first inner tooth ring; and the first gear carrier is connected to the second gear mechanism.

Further, the second gear mechanism is mainly composed of a second sun gear, second planetary gear shafts, second planetary gears, a second inner tooth ring, and a second gear carrier; the second inner tooth ring is fixedly mounted in the inner cavity of the gear case; the second sun gear is fixedly mounted on the output shaft; the second planetary gears and the second planetary gear shafts movably fit and are evenly distributed on a same circumference of the second gear carrier; the second planetary gears engage with both the second inner tooth ring and the second sun gear; the input shaft sleeve is connected to the second gear carrier by means of the first inner tooth ring; the second sun gear is connected to the first gear carrier; and preferably, a lower end of the second sun gear is connected to the first gear carrier, and an upper end of the second sun gear engages with the second planetary gears.

Further, the second inner tooth ring is disposed on the inner cavity of the gear case and is fixedly connected to the gear case, and the output shaft sleeve is fixedly connected to the gear case by means of a connecting shaft to form a rigid body.

Further, number of both the first planetary gears and first planetary gear shafts evenly distributed on the same circumference of the first gear carrier is 2 to 4, and number of both the second planetary gears and second planetary gear shafts evenly distributed on the same circumference of the second gear carrier is 2 to 4.

Further, the clutch control mechanism includes a fork device and a clutch spring; the clutch spring sleeves an outer circumference of the input shaft sleeve, and is urged against the clutch component; the fork device is mounted on the lower housing; and the clutch control mechanism synchronously controls connection and disconnection between the clutch component and the positioning plate as well as disconnection and connection between the clutch component and the torque transmission sleeve, so as to implement switching between rotating in opposite directions to each other/rotating in a same direction of the output shaft sleeve and the output shaft.

Further, the input shaft sleeve is mounted at one end of the gear case by means of the rolling bearing through rotatable fitting; the torque transmission sleeve is in linkage with the input shaft; the torque transmission sleeve is disposed adjacent to the input shaft sleeve; the clutch component sleeves the input shaft sleeve, and is slidably connected to the input shaft sleeve along an axial direction.

Further, one end of the torque transmission sleeve close to the clutch component is provided with a first spline; an inner hole at the end of the torque transmission sleeve close to the clutch component is provided with a first internal spline or a square-headed hole; one end of the clutch component close to the torque transmission sleeve is provided with a second spline; an inner hole at the end of the clutch component close to the torque transmission sleeve is provided with a second internal spline; one end of the clutch component close to the positioning plate is provided with a third spline; the positioning plate is fixedly mounted at a lower portion of the lower housing; one end of the positioning plate close to the clutch component is provided with a fourth spline; a second external spline is disposed on the input shaft sleeve; the first spline of the torque transmission sleeve and the second spline of the clutch component are connected by movable fitting; the second internal spline and the second external spline of the input shaft sleeve are connected by axially slidable fitting; the third spline of the clutch component and the fourth spline of the positioning plate are connected by movable fitting; and the first internal spline or the square-headed hole of the torque transmission sleeve and a first external spline or a square head at a tail end of the input shaft are connected by fitting.

Further, the torque transmission sleeve is in linkage with the input shaft. When the fork device presses down the clutch component, the clutch spring is in a compressed state; the first spline and the second spline are in a separated state; the third spline is connected to the fourth spline; that is the clutch component is disconnected with the torque transmission sleeve and is connected to the positioning plate; and in this case, the output shaft sleeve and the output shaft rotate in opposite directions to each other, that is, the washing machine is in the washing mode. When the fork device leaves the clutch component, the clutch spring ejects out the clutch component; the first spline is connected to the second spline; the third spline is separated from the fourth spline; that is the clutch component is connected to the torque transmission sleeve and is disconnected with the positioning plate; and in this case, the output shaft sleeve and the output shaft rotate in a same direction, that is, the washing machine is in the dewatering mode. On the contrary, when the torque transmission sleeve is in linkage with the gear case, and the fork device presses down the clutch component, the clutch component is connected to the torque transmission sleeve and is disconnected with the positioning plate, and the washing machine is in the dewatering mode; otherwise, the washing machine is in the washing mode.

Further, at least one rolling bearing and at least one oil seal are mounted at a position at which the gear case accommodates a journal of the input shaft sleeve. Preferably, two rolling bearings and one oil seal are mounted. More preferably, the oil seal is mounted between the two rolling bearings.

Alternatively, the torque transmission sleeve mounted on the input shaft is changed to be mounted at one end of the gear case close to the input shaft.

The gear mechanism of the present disclosure is changed to a duplex gear mechanism, and the duplex gear mechanism is not only a decelerating transmission chain between the input shaft and the output shaft but also decelerating transmission chains with an opposite rotational direction between the output shaft and the gear case, the output shaft sleeve.

Further, the duplex gear mechanism is mainly composed of a third sun gear, double-coupling planetary gears, a third inner tooth ring, a fourth inner tooth ring, double-coupling planetary gear shafts, and a duplex gear carrier; the double-coupling planetary gears each includes an upper gear and a lower gear; the first sun gear is fixedly mounted on the input shaft; the lower gear engages with both the first sun gear and the third inner tooth ring; the upper gear engages with the fourth inner tooth ring; the duplex gear carrier and the output shaft are connected as a whole; the fourth inner tooth ring is fixedly mounted in the inner cavity of the gear case; and the input shaft sleeve and the third inner tooth ring are connected as a whole.

A second technical solution for achieving the objective of the present disclosure relates to: a washing machine decelerating clutch, including: an input shaft, an input shaft sleeve, a gear case, a gear mechanism, an output shaft sleeve, an output shaft, a clutch device, and a casing; where the input shaft sleeve sleeves on the input shaft; the output shaft sleeve sleeves on the output shaft; and the gear mechanism is mounted in an inner cavity of the gear case; the input shaft, the input shaft sleeve, the gear case, and the output shaft are connected to the gear mechanism; the gear mechanism includes a first gear mechanism and a second gear mechanism; the input shaft sleeve and a gear carrier of the second gear mechanism are connected as a whole; and the output shaft sleeve and the gear case are connected as a whole; in a washing state, the clutch device locks the input shaft sleeve, and controls the output shaft and the output shaft sleeve to rotate bidirectionally in opposite directions to each other; and in a dewatering state, the clutch device releases locking on the input shaft sleeve, and controls the output shaft and the output shaft sleeve to rotate unidirectionally in a same direction.

Further, the output shaft is connected to the input shaft in a transmission way by means of the first gear mechanism, and the output shaft sleeve is connected to the output shaft in a transmission way by means of the gear case and the second gear mechanism.

Further, the first gear mechanism is a decelerating transmission chain between the input shaft and the output shaft; the second gear mechanism is a decelerating transmission chain with an opposite rotational direction between the output shaft and the gear case.

Further, the first gear mechanism is mainly composed of a first sun gear, a first inner tooth ring, first planetary gears, and a first gear carrier; the first sun gear is mounted on the input shaft; the first inner tooth ring is disposed in a chamber of the gear case; the first planetary gears are evenly distributed on a same circumference of the first gear carrier; the first planetary gears engage with both the first sun gear and the first inner tooth ring; and the output shaft and the first gear carrier are connected as a whole.

Further, the second gear mechanism is mainly composed of a second sun gear, a second inner tooth ring, second planetary gears, and a second gear carrier; the second inner tooth ring is fixedly mounted in the inner cavity of the gear case; the second sun gear is mounted on the output shaft; the second planetary gears are evenly distributed on a same circumference of the second gear carrier; the second planetary gears engage with both the second sun gear and the second inner tooth ring; and the input shaft sleeve and the second gear carrier are connected as a whole.

Further, the input shaft is connected to the first gear mechanism; the input shaft sleeve is connected to the second gear mechanism by means of the first gear mechanism; the output shaft is connected to the second gear mechanism; and the second gear mechanism is connected to the first gear mechanism in a transmission way.

Further, the first gear mechanism is mainly composed of a first sun gear, first planetary gear shafts, first planetary gears, a first inner tooth ring, and a first gear carrier; the first sun gear is mounted on the input shaft; the first inner tooth ring is disposed in the inner cavity of the gear case; the first planetary gears and the first planetary gear shafts movably fit, and are evenly distributed on a same circumference of the first gear carrier; the first planetary gears engage with both the first sun gear and the first inner tooth ring; and the first gear carrier is connected to the second gear mechanism.

Further, the second gear mechanism is mainly composed of a second sun gear, second planetary gear shafts, second planetary gears, a second inner tooth ring, and a second gear carrier; the second inner tooth ring is fixedly mounted in the inner cavity of the gear case; the second sun gear is fixedly mounted on the output shaft; the second planetary gears and the second planetary gear shafts movably fit, and are evenly distributed on a same circumference of the second gear carrier; the second planetary gears engage with both the second inner tooth ring and the second sun gear; the input shaft sleeve is connected to the second gear carrier by means of the first inner tooth ring; the second sun gear is connected to the first gear carrier; and preferably, a lower end of the second sun gear is connected to the first gear carrier, and an upper end of the second sun gear engages with the second planetary gears.

Further, Decelerating transmission ratios of the two gear mechanisms are changed by changing diameters, moduli, and number of teeth of the first planetary gears and the second planetary gears respectively.

Further, number of first planetary gears evenly distributed on the same circumference of the first gear carrier is 2 to 4, and number of second planetary gears evenly distributed on the same circumference of the second gear carrier is 2 to 4.

Further, the clutch device includes a dewatering pin mounted at a lower end of the gear case, a clutch sleeve that is mounted on the input shaft sleeve and rotates integrally with the input shaft sleeve, a brake pin mounted at a lower end of the casing, and a drive unit that drives the clutch sleeve to be connected to/disconnected from the dewatering pin and the brake pin separately; where

in the washing state, the drive unit controls the clutch sleeve to be connected to the brake pin and to be disconnected from the dewatering pin, and in the dewatering state, the drive unit controls the clutch sleeve to be connected to the dewatering pin and to be disconnected from the brake pin.

Alternatively, the clutch device includes a dewatering pin mounted on the input shaft, a clutch sleeve that is mounted on the input shaft sleeve and rotates integrally with the input shaft sleeve, a brake pin mounted at a lower end of the casing, and a drive unit that drives the clutch sleeve to be connected to/disconnected from the dewatering pin and the brake pin separately; where

in the washing state, the drive unit controls the clutch sleeve to be connected to the brake pin and to be disconnected from the dewatering pin, and in the dewatering state, the drive unit controls the clutch sleeve to be connected to the dewatering pin and to be disconnected from the brake pin.

A third technical solution for achieving the objective of the present disclosure relates to: a washing machine decelerating clutch, including: an input shaft, an input shaft sleeve, a gear case, a gear mechanism, an output shaft sleeve, an output shaft, a clutch device, and a casing; the input shaft sleeve sleeves on the input shaft; the output shaft sleeve sleeves on the output shaft; the gear mechanism is mounted in an inner cavity of the gear case; the input shaft, the input shaft sleeve, the gear case, and the output shaft are connected to the gear mechanism; the gear mechanism is a dual gear mechanism that shares a same gear carrier, and includes a first gear mechanism and a second gear mechanism; the input shaft sleeve and the second gear mechanism are connected as a whole; the output shaft sleeve and the gear case are connected as a whole; the output shaft is connected to the input shaft in a transmission way by means of the first gear mechanism; and the output shaft sleeve is connected to the output shaft in a transmission way by means of the gear case and the second gear mechanism; in a washing state, the clutch device locks the input shaft sleeve, and controls the output shaft and the output shaft sleeve to rotate bidirectionally in opposite directions to each other; and in a dewatering state, the clutch device releases locking on the input shaft sleeve, and controls the output shaft and the output shaft sleeve to rotate unidirectionally in a same direction.

Further, the first gear mechanism is a decelerating transmission chain between the input shaft and the output shaft; the second gear mechanism is a decelerating transmission chain with an opposite rotational direction between the output shaft and the gear case.

Further, the first gear mechanism is mainly composed of a first sun gear, a first inner tooth ring, first planetary gears, and a gear carrier; the first sun gear is mounted on the input shaft; the first inner tooth ring is disposed in a chamber of the gear case; the first planetary gears are evenly distributed on a same circumference of the gear carrier; the first planetary gears engage with both the first sun gear and the first inner tooth ring; and the output shaft and the first inner tooth ring are connected as a whole.

Further, the second gear mechanism is mainly composed of a second sun gear, a second inner tooth ring, second planetary gears, and a gear carrier; the second inner tooth ring is fixedly mounted in the inner cavity of the gear case; the second sun gear is mounted on the output shaft; the second planetary gears are evenly distributed on a same circumference of the gear carrier; the second planetary gears engage with both the second sun gear and the second inner tooth ring; the gear carrier is a gear carrier shared by the first gear mechanism and the second gear mechanism; and the input shaft sleeve and the gear carrier are connected as a whole.

Further, Decelerating transmission ratios of the two gear mechanisms are changed by changing diameters, moduli, and number of teeth of the first planetary gears and the second planetary gears respectively.

Further, number of first planetary gears evenly distributed on the same circumference of the gear carrier is 2 to 4, and number of second planetary gears evenly distributed on the same circumference of the gear carrier is 2 to 4.

Further, the clutch device includes a dewatering pin mounted at a lower end of the gear case, a clutch sleeve that is mounted on the input shaft sleeve and rotates integrally with the input shaft sleeve, a brake pin mounted at a lower end of the casing, and a drive unit that drives the clutch sleeve to be connected to/disconnected from the dewatering pin and the brake pin separately; and

in the washing state, the drive unit controls the clutch sleeve to be connected to the brake pin and to be disconnected from the dewatering pin, and in the dewatering state, the drive unit controls the clutch sleeve to be connected to the dewatering pin and to be disconnected from the brake pin.

Alternatively, the clutch device includes a dewatering pin mounted on the input shaft, a clutch sleeve that is mounted on the input shaft sleeve and rotates integrally with the input shaft sleeve, a brake pin mounted at a lower end of the casing, and a drive unit that drives the clutch sleeve to be connected to/disconnected from the dewatering pin and the brake pin separately; and
in the washing state, the drive unit controls the clutch sleeve to be connected to the brake pin and to be disconnected from the dewatering pin, and in the dewatering state, the drive unit controls the clutch sleeve to be connected to the dewatering pin and to be disconnected from the brake pin.

A fourth technical solution for achieving the objective of the present disclosure relates to: a washing machine decelerating clutch, including: an input shaft, an input shaft sleeve, an output shaft, an output shaft sleeve, a gear case, and a gear mechanism that is disposed in the gear case; the output shaft sleeve sleeves on the output shaft; the input shaft sleeve sleeves on the input shaft; the input shaft, the input shaft sleeve, and the output shaft are connected to the gear mechanism; the output shaft sleeve is fixedly connected to the gear case; the gear case is connected to the gear mechanism; and in a washing state, the input shaft sleeve is locked, and the gear case and the output shaft sleeve rotate integrally in a direction opposite to a rotational direction of the output shaft.

A fifth technical solution for achieving the objective of the present disclosure relates to: a washing machine decelerating clutch, including: an input shaft, an input shaft sleeve, an output shaft, an output shaft sleeve, a gear case, and a gear mechanism that is disposed in the gear case and provides rotating torque for the output shaft and the output shaft sleeve during washing; the input shaft sleeve sleeves on the input shaft; the input shaft, the input shaft sleeve, and the output shaft are connected to the gear mechanism; the output shaft sleeve is fixedly connected to the gear case; and the gear case is connected to the gear mechanism.

Further, the gear mechanism includes an inner tooth ring that outputs power; the inner tooth ring is connected to the gear case; and preferably, the gear mechanism includes a first gear mechanism and a second gear mechanism, and an inner tooth ring of the second gear mechanism is connected to the gear case.

Further, the gear mechanism includes the first gear mechanism and the second gear mechanism; and the second gear mechanism is connected to the first gear mechanism by means of the output shaft, or the second gear mechanism is connected to the first gear mechanism by means of a second sun gear of the second gear mechanism.

Further, the gear mechanism includes the first gear mechanism and the second gear mechanism; the input shaft is connected to the first gear mechanism; and the input shaft sleeve is connected to both the first gear mechanism and the second gear mechanism, or the input shaft sleeve is connected to the second gear mechanism by means of the first gear mechanism.

Further, the gear mechanism includes the first gear mechanism and the second gear mechanism; the input shaft is connected to the first gear mechanism; and the output shaft is connected to the second gear mechanism, and the second gear mechanism is connected to the first gear mechanism; or the output shaft is connected to both the first gear mechanism and the second gear mechanism.

Further, the gear mechanism includes the first gear mechanism and the second gear mechanism; the input shaft is fixedly connected to a first sun gear of the first gear mechanism; the input shaft sleeve is connected to a first inner tooth ring of the first gear mechanism and a second gear carrier of the second gear mechanism; the output shaft is connected to the second sun gear of the second gear mechanism and a first gear carrier of the first gear mechanism; the gear case is connected to a second inner tooth ring of the second gear mechanism; and
preferably, the output shaft is connected to the second sun gear of the second gear mechanism, and the second sun gear of the second gear mechanism is connected to the first gear carrier of the first gear mechanism.

Further, the gear mechanism includes the first gear mechanism and the second gear mechanism; the input shaft is fixedly connected to a first sun gear of the first gear mechanism; the input shaft sleeve is connected to a gear carrier shared by the first gear mechanism and the second gear mechanism; the output shaft is connected to a second sun gear of the second gear mechanism and a first inner tooth ring of the first gear mechanism; and the gear case is connected to a second inner tooth ring of the second gear mechanism.

Further, the first sun gear of the first gear mechanism engages with first planetary gears; the first planetary gears engage with the first inner tooth ring; the second sun gear of the second gear mechanism engages with second planetary gears; and the second planetary gears engage with the second inner tooth ring.

Further, the gear mechanism includes the first gear mechanism and the second gear mechanism; the input shaft sleeve is connected to the first gear mechanism; and preferably, the input shaft sleeve is connected to the first inner tooth ring of the first gear mechanism.

Further, a clutch component is slidably disposed on the input shaft sleeve; the clutch component locks the input shaft sleeve at a first position, and rotates together with the input shaft sleeve at a second position.

A sixth technical solution for achieving the objective of the present disclosure relates to: a washing machine decelerating clutch, including: an input shaft, an output shaft, and an output shaft sleeve; the output shaft is connected to an impeller, and enables the impeller to rotate along one direction; the output shaft sleeve is connected to an inner drum, and enables the inner drum to rotate along the other direction; the decelerating clutch further includes a gear case in which a gear mechanism is disposed; and power input by the input shaft is transmitted by means of the gear mechanism to the output shaft and the output shaft sleeve that is disposed integrally with the gear case.

Further, the power input by the input shaft is transmitted to the output shaft sleeve by means of the gear case locally connected to the gear mechanism.

Further, the gear mechanism includes an inner tooth ring; and the power input by the input shaft is transmitted to the output shaft sleeve by means of the gear case connected to the inner tooth ring.

Further, the washing machine decelerating clutch further includes an input shaft sleeve that externally sleeves the input shaft, where the input shaft sleeve is connected to the gear mechanism; and when the input shaft sleeve is locked, the power input by the input shaft is transmitted separately by means of the gear mechanism to the output shaft and the output shaft sleeve that is disposed integrally with the gear case, to drive the impeller and the inner drum to rotate separately.

Further, the power input by the input shaft is transmitted to the output shaft and a second gear mechanism in the gear mechanism after undergoing speed changing by a first gear mechanism in the gear mechanism, and is transmitted to the gear case after the second gear mechanism changes a rotational direction or performs decelerating and changes the rotational direction.

Further, the power input by the input shaft is transmitted to a second sun gear of the second gear mechanism by means of the first gear mechanism; the second sun gear transmits power to the output shaft; and power is transmitted to the gear case by means of second planetary gears and a second inner tooth ring of the second gear mechanism.

Further, the first gear mechanism includes a first inner tooth ring or a first gear carrier; the second gear mechanism includes the second inner tooth ring; and the power input by the input shaft is transmitted by means of the first inner tooth ring or the first gear carrier to the output shaft and the second gear mechanism, and is transmitted to the output shaft sleeve by means of the second gear mechanism and the gear case that is connected to the second inner tooth ring and rotates together with the second inner tooth ring.

Further, the power input by the input shaft is transmitted to the output shaft and the second sun gear of the second gear mechanism by means of a first sun gear, first planetary gears, and the first gear carrier of the first gear mechanism; the output shaft drives the impeller to rotate along one direction; and the second sun gear transmits power to the second inner tooth ring by means of the second planetary gears, to drive the gear case connected to the second inner tooth ring to rotate, so as to drive the output shaft sleeve and the inner drum that are connected to the gear case to rotate along the other direction;
alternatively, the power input by the input shaft is transmitted to the output shaft and the second sun gear of the second gear mechanism by means of the first sun gear, the first planetary gears, and the first inner tooth ring of the first gear mechanism; the output shaft drives the impeller to rotate along one direction; and the second sun gear transmits power to the second inner tooth ring by means of the second planetary gears, to drive the gear case connected to the second inner tooth ring to rotate, so as to drive the output shaft sleeve and the inner drum that are connected to the gear case to rotate along the other direction.

Further, the washing machine decelerating clutch further includes the input shaft sleeve that externally sleeves the input shaft, where the input shaft sleeve is connected to the first gear mechanism and the second gear mechanism; when the input shaft sleeve is locked, the second gear mechanism is a fixed-axis gear train; the first inner tooth ring of the first gear mechanism is fixed; the first gear mechanism is a planetary gear train; the input shaft is transmitted to the output shaft and the second sun gear of the second gear mechanism by means of the first sun gear, the first planetary gears, and the first gear carrier of the first gear mechanism; the second sun gear transmits power to the second inner tooth ring by means of the second planetary gears; and the second inner tooth ring drives the gear case to rotate together, so that the power input by the input shaft simultaneously drives the impeller and the inner drum to rotate in opposite directions to each other;
alternatively, when the input shaft sleeve is locked, the first gear mechanism is a fixed-axis gear train; the input shaft is transmitted to the output shaft and the second sun gear of the second gear mechanism by means of the first sun gear, the first planetary gears, and the first inner tooth ring; the second sun gear transmits power to the second inner tooth ring by means of the second planetary gears; and the second inner tooth ring drives the gear case to rotate together, so that the power input by the input shaft simultaneously drives the impeller and the inner drum to rotate in opposite directions to each other.

Further, a gap is disposed between the first inner tooth ring and the gear case, so that no torque is transmitted between the first inner tooth ring and the gear case.

According to the present disclosure, a washing machine including the foregoing washing machine decelerating clutch includes an outer drum for containing water, an inner drum coaxially disposed in the outer drum and for placing clothing, and an impeller and a drive motor that are coaxially disposed at bottom of the inner drum; the input shaft is connected to the drive motor; the output shaft is connected to the impeller; and the output shaft sleeve is connected to the inner drum; during washing, the decelerating clutch performs decelerating transmission, so that the impeller and the inner drum rotate bidirectionally in opposite directions to each other; and during dewatering, the impeller and the inner drum rotate unidirectionally in a same direction at a same speed.

Further, diameters, moduli, and number of teeth of the first planetary gears and the second planetary gears are determined according to washing capacity, power consumption and washing effect of the washing machine.

Further, the drive motor is connected to the input shaft by means of a belt transmission mechanism, or the driving device is a direct drive motor, and is directly connected to the input shaft.

A washing machine according to the present disclosure includes: an inner drum, an impeller for stirring laundry in the inner drum, a gear case in which a gear mechanism is disposed, and a driving device for providing power to the inner drum and the impeller; driven by the driving device, the inner drum and the impeller rotate in opposite directions to each other to stir the laundry; the gear case is connected to the inner drum, and transmits a driving force of the driving device to the inner drum; and the gear mechanism in the gear case is connected to the impeller, and transmits the driving force of the driving device to the impeller.

Further, the gear case is locally connected to the gear mechanism, and transmits the driving force of the driving device to the inner drum.

Further, the gear case includes an inner tooth ring, and the inner tooth ring is connected to the gear case, and transmits the driving force of the driving device to the inner drum.

Further, the washing machine further includes an input shaft and an input shaft sleeve that externally sleeves the input shaft; the input shaft sleeve is connected to the gear mechanism; the driving force of the driving device is transmitted to the gear mechanism by means of the input shaft; and when the input shaft sleeve is locked, power input by the input shaft is transmitted by means of the gear mechanism to an output shaft and an output shaft sleeve that is disposed integrally with the gear case, to drive the impeller and the inner drum to rotate separately.

Further, the driving force of the driving device is transmitted to the output shaft connected to the impeller and a second gear mechanism in the gear mechanism after undergoing speed changing by a first gear mechanism in the gear mechanism, and is transmitted to the gear case after the second gear mechanism changes a rotational direction or performs decelerating and changes the rotational direction.

Further, the driving force of the driving device is transmitted to a second sun gear of the second gear mechanism by means of the first gear mechanism; the second sun gear transmits power to the output shaft; and power is transmitted to the gear case by means of second planetary gears and a second inner tooth ring of the second gear mechanism.

Further, the first gear mechanism includes a first inner tooth ring or a first gear carrier; the second gear mechanism includes a second inner tooth ring; and the driving force of the driving device is transmitted by means of the first inner tooth ring or the first gear carrier to the output shaft connected to the impeller and the second gear mechanism, and is transmitted to the output shaft sleeve connected to the inner drum by means of the second gear mechanism and the gear case that is connected to the second inner tooth ring and rotates together with the second inner tooth ring.

Further, the driving force of the driving device is transmitted by means of a first sun gear, first planetary gears, and the first gear carrier of the first gear mechanism to the output shaft connected to the impeller and the second sun gear of the second gear mechanism; the output shaft drives the impeller to rotate along one direction; and the second sun gear transmits force to the second inner tooth ring by means of the second planetary gears, to drive the gear case connected to the second inner tooth ring to rotate, so as to drive the output shaft sleeve and the inner drum that are successively connected to the gear case to rotate along the other direction;
alternatively, the driving force of the driving device is transmitted by means of the first sun gear, the first planetary gears, and the first inner tooth ring of the first gear mechanism to the output shaft connected to the impeller and the second sun gear of the second gear mechanism; the output shaft drives the impeller to rotate along one direction; and the second sun gear transmits force to the second inner tooth ring by means of the second planetary gears, to drive the gear case connected to the second inner tooth ring to rotate, so as to drive the output shaft sleeve and the inner drum that are connected to the gear case to rotate along the other direction.

Further, the driving device further includes the input shaft and the input shaft sleeve that externally sleeves the input shaft, and the input shaft sleeve is connected to the first gear mechanism and the second gear mechanism; when the input shaft sleeve is locked, the second gear mechanism is a fixed-axis gear train; the first inner tooth ring of the first gear mechanism is fixed; the first gear mechanism is a planetary gear train; the input shaft is transmitted to the output shaft and the second sun gear of the second gear mechanism by means of the first sun gear, the first planetary gears, and the first gear carrier of the first gear mechanism; the second sun gear transmits power to the second inner tooth ring by means of the second planetary gears; and the second inner tooth ring drives the gear case to rotate together, so that the power input by the input shaft simultaneously drives the impeller and the inner drum to rotate in opposite directions to each other;
alternatively, when the input shaft sleeve is locked, the first gear mechanism is a fixed-axis gear train; the input shaft is transmitted to the output shaft and the second sun gear of the second gear mechanism by means of the first sun gear, the first planetary gears, and the first inner tooth ring of the first gear mechanism; the second sun gear transmits power to the second inner tooth ring by means of the second planetary gears; and the second inner tooth ring drives the gear case to rotate together, so that power input by the driving device simultaneously drives the impeller and the inner drum to rotate in opposite directions to each other.

Further, a gap is disposed between the first inner tooth ring and the gear case, so that no torque is transmitted between the first inner tooth ring and the gear case.

By adopting the foregoing technical solutions, compared with the related art, the present disclosure has following beneficial effects:
The present disclosure provides a decelerating clutch that is high in efficiency and simple and reliable in structure, and rotates bidirectionally for washing, the present disclosure also provides and an application solution on a washing machine, thereby improving transmission efficiency of the washing machine and reducing power consumption. The decelerating clutch of the present disclosure is simple in structure, is highly reliable, and improves performance of a washing machine.

The gear mechanism in the decelerating clutch of the present disclosure uses different transmission chains, such as a dual gear mechanism, thereby meeting a reduction ratio, enabling the output shaft to rotate in a direction opposite to that of the gear case and the output shaft sleeve, improving a carrying capacity, and eliminating defects such as that an output shaft sleeve and a gear case of a traditional dual-power decelerating clutch are separated, system rigidity is poor, and in a dewatering state, an inner drum swings violently and produces loud noise, so that the decelerating gear train is novel in structure, desirable in system rigidity, desirable in carrying capacity, reliable in working, and long in service life, performing rubbing washing on laundry in a stable and ideal water flow, thereby improving a rate of washing ability, reducing power consumption, and reducing or even eliminating tangling of the laundry.

According to the present disclosure, the clutch device is improved, so that a clutch mechanism of the clutch device would not fail, and is long in service life and low in noise. The clutch device can completely replace a clutch device that uses a square wire spring, a ratchet, a detent, and a brake lever in the past, and in addition, a structure of an overrunning clutch in the related art is removed, thereby reducing manufacturing costs.

### Description of the Drawings

FIG. 1 is a schematic structural view showing a washing machine decelerating clutch according to the present disclosure;
FIG. 2 is a schematic structural view showing a clutch device of the washing machine decelerating clutch according to the present disclosure;
FIG. 3 is a schematic structural view showing another washing machine decelerating clutch according to the present disclosure;
FIG. 4 is a schematic structural view showing another clutch device of the washing machine decelerating clutch according to the present disclosure;
FIG. 5 is a schematic structural view showing a washing machine decelerating clutch according to the present disclosure;
FIG. 6 is a schematic structural view showing mounting of a washing machine decelerating clutch according to the present disclosure; and
FIG. 7 is a schematic view showing a connection structure of still another washing machine decelerating clutch according to the present disclosure.

Reference numerals: first gear mechanism A; second gear mechanism B; journal C; input shaft 1; input shaft sleeve 2; clutch sleeve 3; brake pin 4; gear case 5; dewatering pin 6; first sun gear 7; first planetary gear 8; first inner tooth ring 9; first gear carrier 10; shared gear carrier 11; output shaft sleeve 12; output shaft 13; casing 15; second gear carrier cover 114; second planetary gear shaft 115; second planetary gear 16; second inner tooth ring 17; second gear carrier 18; second sun gear 19; torque transmission sleeve 20; clutch component 21; clutch spring 22; fork device 23; rolling bearing 24; braking arm 25; brake band 26; rolling bearing 27; upper housing 28; lower housing 29; positioning plate 30; groove 31; boss 32; fifth spline 33; sixth spline 34; third inner tooth ring 35; fourth inner tooth ring 36; double-coupling planetary gear shaft 37; duplex gear carrier 38; upper gear 39; lower gear 40; first external spline 101b; third sun gear 101c; second external spline 102a; rolling bearing 103; oil seal 104; first gear carrier cover 106; first planetary gear shaft 107; connecting shaft 111; first spline 20a; first internal spline 20b; second spline 21a; second internal spline 21b; third spline 21c; fourth spline 30a.

### Detailed Description

Specific embodiments of the present disclosure are described in further detail below with reference to the accompanying drawings.

### Embodiment 1

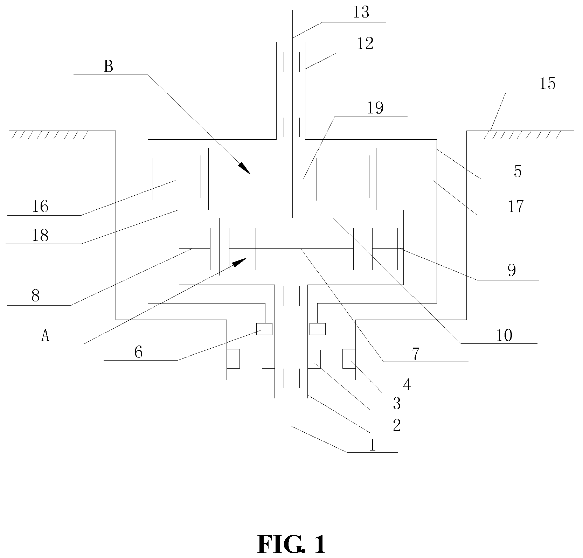

As shown in FIG. 1 to FIG. 6, a washing machine decelerating clutch in this embodiment includes: an input shaft 1, an input shaft sleeve 2, an output shaft 13, an output shaft sleeve 12, a gear case 5, and a gear mechanism that is disposed in the gear case 5 and provides rotating torque for the output shaft 13 and the output shaft sleeve 12 during washing. The input shaft sleeve 2 sleeves on the input shaft 1; the input shaft 1, the input shaft sleeve 2, and the output shaft 13 are connected to the gear mechanism; the output shaft sleeve 12 is fixedly connected to the gear case 5; and the gear case 5 is connected to the gear mechanism. During washing, power input by the input shaft 1 is transmitted to the gear case 5 and the output shaft 13 by means of the gear mechanism when the input shaft sleeve 2 is locked, so that the output shaft 13 and the output shaft sleeve 12 that is fixedly connected to the gear case rotate separately.

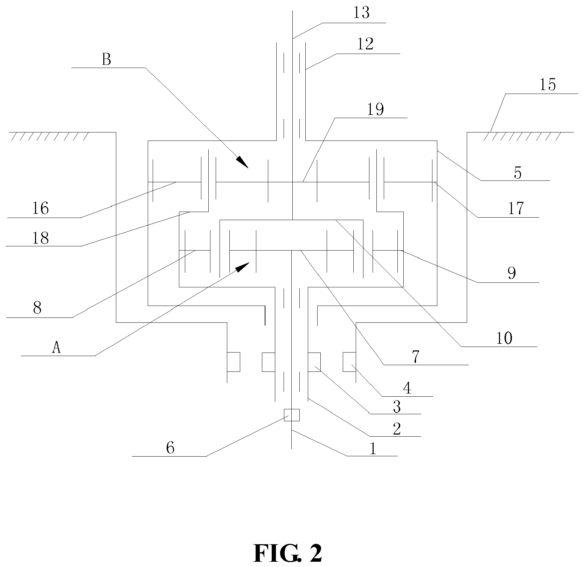

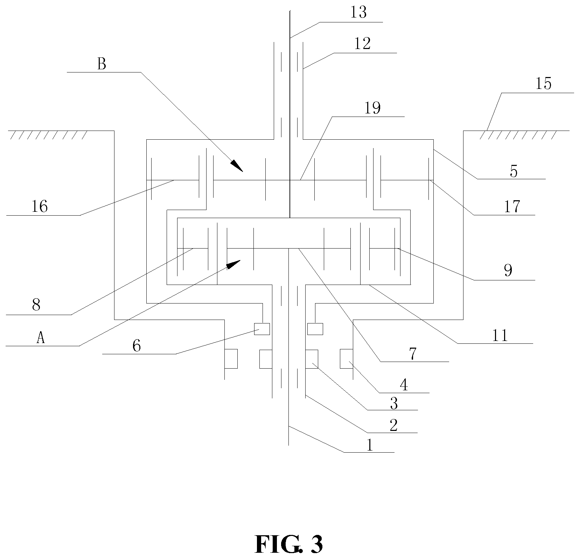

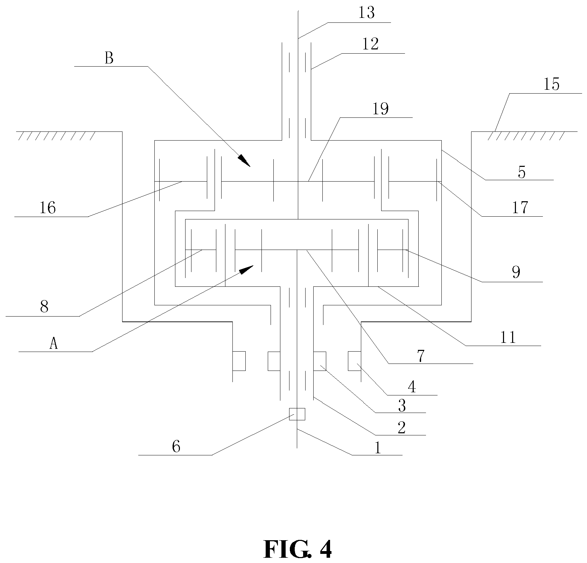

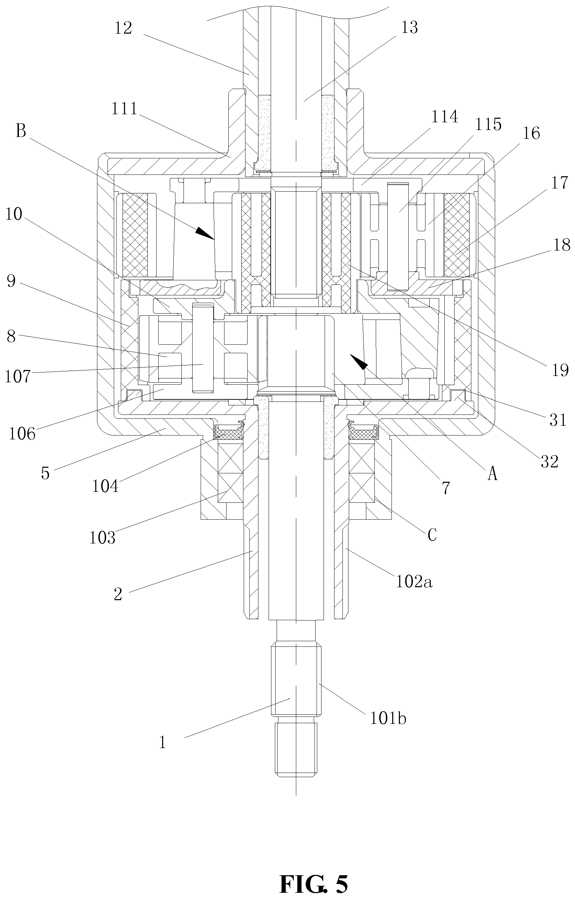

The gear mechanism includes a first gear mechanism A and a second gear mechanism B; the input shaft 1 is connected to the first gear mechanism A; and the input shaft sleeve 2 is connected to both the first gear mechanism A and the second gear mechanism B (referring to FIG. 3 and FIG. 4); or, the input shaft sleeve 2 is connected to the second gear mechanism B by means of the first gear mechanism A (referring to FIG. 1 and FIG. 2). The output shaft 13 is connected to the second gear mechanism B; the second gear mechanism B is connected to the first gear mechanism A by means of a second sun gear 19 of the second gear mechanism B; the second sun gear 19 is a power input end of the second gear mechanism B, and is connected to a power output end of the first gear mechanism A; and the first gear mechanism A transmits power to the second gear mechanism B (referring to FIG. 5). Alternatively, the second gear mechanism B is connected to the first gear mechanism A by means of the output shaft 13, that is, the output shaft 13 is connected to both the first gear mechanism A and the second gear mechanism B; the first gear mechanism A transmits power to the output shaft 13; and the output shaft 13 transmits power to the second gear mechanism B (referring to FIG. 1 to FIG. 4). The second gear mechanism B includes a second inner tooth ring 17 that outputs power, and the second inner tooth ring 17 is connected to the gear case 5.

As shown in FIG. 5, the input shaft 1 is fixedly connected to a first sun gear 7 of the first gear mechanism A; the input shaft sleeve 2 is connected to a first inner tooth ring 9 of the first gear mechanism A as well as a second gear carrier 18 of the second gear mechanism B; and the output shaft 13 is connected to the second sun gear 19 of the second gear mechanism B as well as a first gear carrier 10 of the first gear mechanism A. Preferably, the output shaft 13 is connected to the second sun gear 19 of the second gear mechanism B, and the second sun gear 19 of the second gear mechanism B is connected to the first gear carrier 10 of the first gear mechanism A. The first sun gear 7 of the first gear mechanism A engages with first planetary gears 8; the first planetary gears 8 engage with the first inner tooth ring 9; the first planetary gears 8 are mounted on the first gear carrier 10; the second sun gear 19 of the second gear mechanism B engages with second planetary gears 16; the second planetary gears 16 engage with the second inner tooth ring 17; and the second planetary gears 16 are mounted on the second gear carrier 18.

Alternatively, the input shaft 1 is fixedly connected to the first sun gear 7 of the first gear mechanism A; the input shaft sleeve 2 is connected to a gear carrier 11 shared by the first gear mechanism A and the second gear mechanism B; the output shaft 13 is connected to the second sun gear 19 of the second gear mechanism B as well as the first inner tooth ring 9 of the first gear mechanism A; the gear case 5 is connected to the second inner tooth ring 17 of the second gear mechanism B; and a difference from the foregoing lies in that the first planetary gears 8 and the second planetary gears 16 are mounted on the shared gear carrier 11 (referring to FIG. 3 and FIG. 4).

During washing, a clutch component 21 slides on the input shaft sleeve 2 to a first position to lock the input shaft sleeve 2, and in this case, power input by the input shaft 1 is transmitted to the output shaft 13 and the gear case 5 separately by means of the gear mechanism, so as to drive the output shaft 13 and the output shaft sleeve 12 to rotate separately. During dewatering, the clutch component 21 slides on the input shaft sleeve 2 to a second position to rotate together with the input shaft sleeve 2, and in this case, the input shaft 1 drives the input shaft sleeve 2, the gear case 5, the gear mechanism, and the output shaft 13 to rotate together.

### Embodiment 2

As shown in FIG. 1 to FIG. 6, a washing machine decelerating clutch according to this embodiment includes: an input shaft 1, an input shaft sleeve 2, an output shaft 13, an output shaft sleeve 12, a gear case 5, and a gear mechanism that is disposed in the gear case 5. The output shaft sleeve 12 sleeves on the output shaft 13; the input shaft sleeve 2 sleeves on the input shaft 1; the input shaft 1, the input shaft sleeve 2, and the output shaft 13 are connected to the gear mechanism; the output shaft sleeve 12 is fixedly connected to the gear case 5; the gear case 5 is connected to the gear mechanism; and in a washing state, the input shaft sleeve 2 is locked, and the gear case 5 and the output shaft sleeve 12 rotate integrally in a direction opposite to a rotational direction of the output shaft 13.

The gear mechanism includes a first gear mechanism A and a second gear mechanism B; the input shaft 1 is connected to the first gear mechanism A; and the input shaft sleeve 2 is connected to both the first gear mechanism A and the second gear mechanism B (referring to FIG. 3 and FIG. 4); or, the input shaft sleeve 2 is connected to the second gear mechanism B by means of the first gear mechanism A (referring to FIG. 1 and FIG. 2). The output shaft 13 is connected to the second gear mechanism B; the second gear mechanism B is connected to the first gear mechanism A by means of a second sun gear 19 of the second gear mechanism B; the second sun gear 19 is a power input end of the second gear mechanism B, and is connected to a power output end of the first gear mechanism A; and the first gear mechanism A transmits power to the second gear mechanism B (referring to FIG. 5). Alternatively, the second gear mechanism B is connected to the first gear mechanism A by means of the output shaft 13, that is, the output shaft 13 is connected to both the first gear mechanism A and the second gear mechanism B; the first gear mechanism A transmits power to the output shaft 13; and the output shaft 13 transmits power to the second gear mechanism B (referring to FIG. 1 to FIG. 4). The second gear mechanism B includes a second inner tooth ring 17 that outputs power, and the second inner tooth ring 17 is connected to the gear case 5.

As shown in FIG. 5, the input shaft 1 is fixedly connected to a first sun gear 7 of the first gear mechanism A; the input shaft sleeve 2 is connected to a first inner tooth ring 9 of the first gear mechanism A as well as a second gear carrier 18 of the second gear mechanism B; and the output shaft 13 is connected to the second sun gear 19 of the second gear mechanism B as well as a first gear carrier 10 of the first gear mechanism A. Preferably, the output shaft 13 is connected to the second sun gear 19 of the second gear mechanism B, and the second sun gear 19 of the second gear mechanism B is connected to the first gear carrier 10 of the first gear mechanism A. The first sun gear 7 of the first gear mechanism A engages with first planetary gears 8; the first planetary gears 8 engage with the first inner tooth ring 9; the first planetary gears 8 are mounted on the first gear carrier 10; the second sun gear 19 of the second gear mechanism B engages with second planetary gears 16; the second planetary gears 16 engage with the second inner tooth ring 17; and the second planetary gears 16 are mounted on the second gear carrier 18.

Alternatively, the input shaft 1 is fixedly connected to the first sun gear 7 of the first gear mechanism A; the input shaft sleeve 2 is connected to a gear carrier 11 shared by the first gear mechanism A and the second gear mechanism B; the output shaft 13 is connected to the second sun gear 19 of the second gear mechanism B as well as the first inner tooth ring 9 of the first gear mechanism A; the gear case 5 is connected to the second inner tooth ring 17 of the second gear mechanism B; and a difference from the foregoing lies in that the first planetary gears 8 and the second planetary gears 16 are mounted on the shared gear carrier 11 (referring to FIG. 3 and FIG. 4).

During washing, a clutch component 21 slides on the input shaft sleeve 2 to a first position to lock the input shaft sleeve 2, and in this case, power input by the input shaft 1 is transmitted to the output shaft 13 and the gear case 5 separately by means of the gear mechanism, so as to drive the output shaft 13 and the output shaft sleeve 12 to rotate separately. During dewatering, the clutch component 21 slides on the input shaft sleeve 2 to a second position to rotate together with the input shaft sleeve 2, and in this case, the input shaft 1 drives the input shaft sleeve 2, the gear case 5, the gear mechanism, and the output shaft 13 to rotate together.

### Embodiment 3

As shown in FIG. 1 to FIG. 6, a washing machine decelerating clutch according to this embodiment includes: an input shaft 1, an output shaft 13, and an output shaft sleeve 12. The output shaft 13 is connected to an impeller, and enables the impeller to rotate along one direction; the output shaft sleeve 12 is connected to an inner drum, and enables the inner drum to rotate along the other direction; and a connection relationship between the output shaft 13 and the impeller of the washing machine and a connection relationship between the output shaft sleeve 12 and the inner drum of the washing machine are of the related art, and details are not described herein again. The decelerating clutch of the present disclosure further includes a gear case 5 in which a gear mechanism is disposed, where power input by the input shaft 1 is transmitted by means of the gear mechanism to the output shaft 13 and the output shaft sleeve 12 that is disposed integrally with the gear case 5.

The decelerating clutch further includes an input shaft sleeve 2 that externally sleeves the input shaft 1, where the input shaft sleeve 2 is connected to the gear mechanism. During washing, the input shaft sleeve 2 is locked, and power input by the input shaft 1 is transmitted separately by means of the gear mechanism to the output shaft 13 and the output shaft sleeve 12 that is disposed integrally with the gear case 5, to drive the impeller and the inner drum to rotate separately.

The gear mechanism includes a first gear mechanism A and a second gear mechanism B; the first gear mechanism A includes a first inner tooth ring 9; the second gear mechanism B includes a second inner tooth ring 17; the gear case 5 is connected to only the second inner tooth ring 17 of the second gear mechanism B; and a gap is disposed between the first inner tooth ring 9 of the first gear mechanism A and the gear case 5, so that no torque is transmitted between the first inner tooth ring 9 and the gear case 5. Power input by the input shaft 1 passes through the first gear mechanism A and the second gear mechanism B, and is transmitted by the second inner tooth ring 17 of the second gear mechanism B to the gear case 5.

In the present disclosure, the power input by the input shaft 1 is transmitted to the output shaft 13 and the second gear mechanism B after undergoing speed changing performed by the first gear mechanism A, and is transmitted to the gear case 5 after the second gear mechanism B changes a rotational direction of the power or performs deceleration on the power and changes the rotational direction.

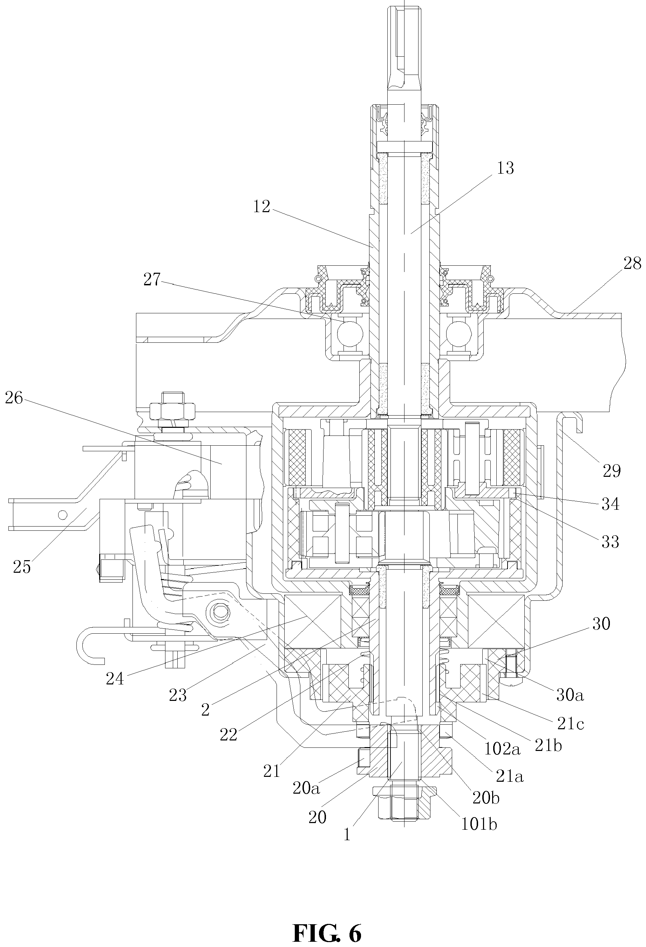

The first gear mechanism A includes the first inner tooth ring 9 or a first gear carrier 10; the second gear mechanism B includes a second sun gear 19 and the second inner tooth ring 17; power input by the input shaft 1 is transmitted to the output shaft 13 by means of the first gear mechanism A; and the output shaft 13 transmits power to the output shaft sleeve 12 by means of the second gear mechanism B and the gear case 5 that is connected to the second inner tooth ring 17 and rotates together with the second inner tooth ring 17 (referring to FIG. 1 to FIG. 4). Alternatively, the power input by the input shaft 1 is transmitted to the second sun gear 19 of the second gear mechanism B by means of the first gear mechanism A; the second sun gear 19 transmits power to the output shaft 13; and power is transmitted to the gear case 5 by means of second planetary gears 16 and the second inner tooth ring 17 of the second gear mechanism B (referring to FIG. 5 and FIG. 6). Power input by the input shaft 1 passes through the first gear mechanism A, and is output by the first inner tooth ring 9 or the first gear carrier 10 and is transmitted to the output shaft 13 or the second sun gear 19.

Specifically, as shown in FIG. 1 and FIG. 2, power input by the input shaft 1 is transmitted to the output shaft 13 as well as the second sun gear 19 of the second gear mechanism B by means of a first sun gear 7, first planetary gears 8, and the first gear carrier 10 of the first gear mechanism A; the output shaft 13 drives the impeller to rotate along one direction; and the second sun gear 19 transmits power to the second inner tooth ring 17 by means of the second planetary gears 16, to drive the gear case 5 connected to the second inner tooth ring 17 to rotate, so as to drive the output shaft sleeve 12 and the inner drum that are connected to the gear case 5 to rotate along the other direction.

Alternatively, as shown in FIG. 3 and FIG. 4, power input by the input shaft 1 is transmitted to the output shaft 13 as well as the second sun gear 19 of the second gear mechanism B by means of the first sun gear 7, the first planetary gears 8, and the first inner tooth ring 9 of the first gear mechanism A; the output shaft 13 drives the impeller to rotate along one direction; and the second sun gear 19 transmits power to the second inner tooth ring 17 by means of the second planetary gears 16, to drive the gear case 5 connected to the second inner tooth ring 17 to rotate, so as to drive the output shaft sleeve 12 and the inner drum that are connected to the gear case 5 to rotate along the other direction.

As shown in FIG. 1 and FIG. 5, the input shaft sleeve 2 is connected to the first gear mechanism A and the second gear mechanism B; when the input shaft sleeve 2 is locked, the second gear mechanism B is a fixed-axis gear train; the first inner tooth ring 9 of the first gear mechanism A is fixed; the first gear mechanism A is a planetary gear train; power input by the input shaft 1 is transmitted to the output shaft 13 as well as the second sun gear 19 of the second gear mechanism B by means of the first sun gear 7, the first planetary gears 8, and the first gear carrier 10 of the first gear mechanism A; the second sun gear 19 transmits power to the second inner tooth ring 17 by means of the second planetary gears 16; and the second inner tooth ring 17 drives the gear case 5 to rotate together, so that power input by the input shaft 1 simultaneously drives the impeller and the inner drum to rotate in opposite directions to each other.

Alternatively, as shown in FIG. 3 and FIG. 4, when the input shaft sleeve 2 is locked, the first gear mechanism A is a fixed-axis gear train; the input shaft 1 is transmitted to the output shaft 13 as well as the second sun gear 19 of the second gear mechanism B by means of the first sun gear 7, the first planetary gears 8, and the first inner tooth ring 9; the second sun gear 19 transmits power to the second inner tooth ring 17 by means of the second planetary gears 16; and the second inner tooth ring 17 drives the gear case 5 to rotate together, so that power input by the input shaft 1 simultaneously drives the impeller and the inner drum to rotate in opposite directions to each other.

### Embodiment 4

As shown in FIG. 1 and FIG. 2, a washing machine decelerating clutch according to this embodiment includes: an input shaft 1, an input shaft sleeve 2, a gear case 5, a gear mechanism mounted in the gear case 5, an output shaft sleeve 12, an output shaft 13, a clutch device, and a casing 15. The input shaft sleeve 2 sleeves on the input shaft 1; the output shaft sleeve 12 sleeves on the output shaft 13; the gear mechanism is mounted in an inner cavity of the gear case 5; the input shaft 1, the input shaft sleeve 2, the gear case 5, and the output shaft 13 are connected to the gear mechanism; the gear mechanism includes a first gear mechanism A and a second gear mechanism B; the input shaft sleeve 12 and a gear carrier of the second gear mechanism B are connected as a whole; and the output shaft sleeve 12 and the gear case 5 are connected as a whole. In a washing state, the clutch device locks the input shaft sleeve 2, and controls the output shaft 13 and the output shaft sleeve 12 to rotate bidirectionally in opposite directions to each other. In a dewatering state, the clutch device releases locking on the input shaft sleeve 2; the input shaft sleeve 2 is in linkage with the gear case 5 or the input shaft 1; and the output shaft 13 and the output shaft sleeve 12 are controlled to rotate unidirectionally in a same direction.

The output shaft 13 is connected to the input shaft 1 in a transmission way by means of the first gear mechanism A; the output shaft sleeve 12 is connected to the output shaft 13 in a transmission way by means of the gear case 5 and the second gear mechanism B; the first gear mechanism A is a decelerating transmission chain between the input shaft 1 and the output shaft 13; and the second gear mechanism B is a decelerating transmission chain with an opposite rotational direction between the output shaft 13 and the gear case 5.

The first gear mechanism A is mainly composed of a first sun gear 7, a first inner tooth ring 9, first planetary gears 8, and a first gear carrier 10; the first sun gear 7 is mounted on the input shaft 1; the first inner tooth ring 9 is disposed in a chamber of the gear case 5; the first planetary gears 8 are evenly distributed on a same circumference of the first gear carrier 10, and engage with both the first sun gear 7 and the first inner tooth ring 9; the output shaft 13 and the first gear carrier 10 are connected as a whole; and gear shafts of the first planetary gears 8 are mounted on the first gear carrier 10.

The second gear mechanism B is mainly composed of a second sun gear 19, a second inner tooth ring 17, second planetary gears 16, and a second gear carrier 18. The second inner tooth ring 17 is fixedly mounted in the inner cavity of the gear case 5; the second sun gear 19 is mounted on the output shaft 13; the second planetary gears 16 are evenly distributed on a same circumference of the second gear carrier 18, and engage with both the second sun gear 19 and the second inner tooth ring 17; the input shaft sleeve 2 and the second gear carrier 18 are connected as a whole; and gear shafts of the second planetary gears 16 are mounted on the second gear carrier 18. The first inner tooth ring 9 of the first gear mechanism A is fixedly mounted on the second gear carrier 18 of the second gear mechanism B.

Number of first planetary gears 8 evenly distributed on the same circumference of the first gear carrier 10 is 2 to 4, and number of second planetary gears 16 evenly distributed on the same circumference of the second gear carrier 18 is 2 to 4. Decelerating transmission ratios of the two gear mechanisms are respectively changed by changing diameters, moduli, and number of teeth of the first planetary gears 8 and the second planetary gears 16.

As shown in FIG. 1, the clutch device includes a dewatering pin 6 mounted at a lower end of the gear case 5, a clutch sleeve 3 that is mounted on the input shaft sleeve 2 and rotates integrally with the input shaft sleeve, a brake pin 4 mounted at a lower end of the casing 15, and a drive unit that drives the clutch sleeve 3 to be connected to/disconnected from the dewatering pin 6 and the brake pin 4 separately.

In the washing state, the drive unit controls the clutch sleeve 3 to be connected to the brake pin 4 and to be disconnected from the dewatering pin 6, and in the dewatering state, the drive unit controls the clutch sleeve 3 to be connected to the dewatering pin 6 and to be disconnected from the brake pin 4.

Alternatively, as shown in FIG. 2, the clutch device according to this embodiment includes the dewatering pin 6 mounted on the input shaft 1, the clutch sleeve 3 that is mounted on the input shaft sleeve 2 and rotates integrally with the input shaft sleeve, the brake pin 4 mounted at the lower end of the casing 15, and the drive unit that drives the clutch sleeve 3 to be connected to/disconnected from the dewatering pin 6 and the brake pin 4 separately.

In the washing state, the drive unit controls the clutch sleeve 3 to be connected to the brake pin 4 and to be disconnected from the dewatering pin 6, and in the dewatering state, the drive unit controls the clutch sleeve 3 to be connected to the dewatering pin 6 and to be disconnected from the brake pin 4.

The clutch sleeve 3 is upwardly and downwardly slidably mounted on the input shaft sleeve 2, and can rotate integrally with the input shaft sleeve. The drive unit controls the clutch sleeve 3 to upwardly and downwardly slide so as to be connected to or disconnected from splines of the dewatering pin 6 and the brake pin 4. The drive unit includes a return spring and a device that drives the clutch sleeve to act, and the device is an electromagnetic drive or a mechanical drive, for example, a fork structure.

The washing machine of the present disclosure includes an outer drum for containing water, an inner drum coaxially disposed in the outer drum and for placing clothing, and an impeller and a drive motor that are coaxially disposed at a bottom of the inner drum. The input shaft 1 is connected to the drive motor; the output shaft 13 is connected to the impeller; and the output shaft sleeve 12 is connected to the inner drum. During washing, the decelerating clutch according to this embodiment performs decelerating transmission, so that the impeller and the inner drum rotate bidirectionally in opposite directions to each other; and during dewatering, the impeller and the inner drum rotate unidirectionally in a same direction at a same speed. The washing machine is an existing full-automatic impeller type washing machine, a structure of which is not shown again.

According to the washing machine, switching between a washing mode and a dewatering mode is achieved by switching between connection and disconnection between the clutch sleeve 3 in the clutch device and the brake pin 4, the dewatering pin 6. When the clutch sleeve 3 is connected to the brake pin 4 and is disconnected from the dewatering pin 6, the washing machine is in the washing mode. In this case, the drive motor bidirectionally rotates repeatedly; power is transmitted by the input shaft 1 and the first gear mechanism A in a decelerating manner to the output shaft 13 to enable the output shaft 13 to rotate; and the output shaft 13 transfers power to the output shaft sleeve 12 in a decelerating manner by means of the second gear mechanism B, so as to achieve a repeated bidirectional rotation of the output shaft 13 and the output shaft sleeve 12. Specifically, in the washing state, the first gear mechanism A is in a free state; the first sun gear 7 drives the first planetary gears 8 to rotate; the first planetary gears 8 perform rotation and revolution, so as to drive the first gear carrier 10 to rotate; the output shaft 13 connected to the first gear carrier 10 rotates, to drive the impeller to rotate; and the output shaft 13 rotates, and drives the second sun gear 19 to rotate, to drive the second planetary gears 16 to rotate. Because the clutch sleeve 3 is connected to the brake pin 4, the second gear mechanism B converts into a fixed-axis gear train, the second gear mechanism B cannot perform revolution, and rotation of the second planetary gears 16 drives the second inner tooth ring 17 to rotate, so that the gear case 5 and the output shaft sleeve 12 rotate, to drive the inner drum and the impeller to rotate in opposite directions to each other.

When the clutch sleeve 3 is disconnected from the brake pin 4 and is connected to the dewatering pin 6, the washing machine is in the dewatering mode. In this case, the drive motor rotates unidirectionally according to a set direction. Because the clutch sleeve 3 is connected and locked to the dewatering pin 6, the input shaft 1, the input shaft sleeve 2, the first gear mechanism A, the second gear mechanism B, the output shaft 13, and the output shaft sleeve 12 are automatically combined as a whole, the dewatering mode is entered, and the inner drum is connected to the output shaft sleeve 12 and starts rotating to perform centrifugal dewatering.

### Embodiment 5

As shown in FIG. 3 and FIG. 4, a washing machine decelerating clutch according to this embodiment includes: an input shaft 1, an input shaft sleeve 2, a gear case 5, a gear mechanism, an output shaft sleeve 12, an output shaft 13, a clutch device, and a casing 15. The input shaft sleeve 2 sleeves on the input shaft 1; the output shaft sleeve 12 sleeves on the output shaft 13; the gear mechanism is mounted in an inner cavity of the gear case 5; the input shaft 1, the input shaft sleeve 2, the gear case 5, and the output shaft 13 are connected to the gear mechanism; the gear mechanism is a dual gear mechanism that shares a same gear carrier 11, and includes a first gear mechanism A and a second gear mechanism B; the input shaft sleeve 2 and the second gear mechanism B are connected as a whole; the output shaft sleeve 12 and the gear case 5 are connected as a whole; the output shaft 13 is connected to the input shaft 1 in a transmission way by means of the first gear mechanism A; and the output shaft sleeve 12 is connected to the output shaft 13 in a transmission way by means of the gear case 5 and the second gear mechanism B. In a washing state, the clutch device locks the input shaft sleeve 2, and controls the output shaft 13 and the output shaft sleeve 12 to rotate bidirectionally in opposite directions to each other. In a dewatering state, the clutch device releases locking on the input shaft sleeve 2, and controls the output shaft 13 and the output shaft sleeve 12 to rotate unidirectionally in a same direction.

The first gear mechanism A is a decelerating transmission chain between the input shaft 1 and the output shaft 13; and the second gear mechanism B is a decelerating transmission chain with an opposite rotational direction between the output shaft 13 and the gear case 5.

The first gear mechanism A is mainly composed of a first sun gear 7, a first inner tooth ring 9, first planetary gears 8, and the gear carrier 11; the first sun gear 7 is mounted on the input shaft 1; the first inner tooth ring 9 is disposed in a chamber of the gear case 5; the first planetary gears 8 are evenly distributed on a same circumference of the gear carrier 11, and engage with both the first sun gear 7 and the first inner tooth ring 9; and the output shaft 13 and the first gear carrier 9 are connected as a whole.

The second gear mechanism B is mainly composed of a second sun gear 19, a second inner tooth ring 17, second planetary gears 16, and the gear carrier 11. The second inner tooth ring 17 is fixedly mounted in the inner cavity of the gear case 5; the second sun gear 19 is mounted on the output shaft 13; the second planetary gears 16 are evenly distributed on a same circumference of the gear carrier 11, and engage with both the second sun gear 19 and the second inner tooth ring 17; the input shaft sleeve 2 and the gear carrier 11 are connected as a whole; the gear carrier 11 is a gear carrier shared by the first gear mechanism A and the second gear mechanism B; and gear shafts of the first planetary gears 8 and the second planetary gears 16 are all mounted on the shared gear carrier 11.

Number of first planetary gears 8 evenly distributed on the same circumference of the shared gear carrier 11 is 2 to 4, and number of second planetary gears 16 evenly distributed on the same circumference of the shared gear carrier 11 is 2 to 4. Decelerating transmission ratios of the two gear mechanisms are changed by changing diameters, moduli, and number of teeth of the first planetary gears 8 and the second planetary gears 16 respectively.

As shown in FIG. 3, the clutch device according to this embodiment includes a dewatering pin 6 mounted at a lower end of the gear case 5, a clutch sleeve 3 that is mounted on the input shaft sleeve 2 and rotates integrally with the input shaft sleeve, a brake pin 4 mounted at a lower end of the casing 15, and a drive unit that drives the clutch sleeve 3 to be connected to/disconnected from the dewatering pin 6 and the brake pin 4 separately.

In the washing state, the drive unit controls the clutch sleeve 3 to be connected to the brake pin 4 and to be disconnected from the dewatering pin 6, and in the dewatering state, the drive unit controls the clutch sleeve 3 to be connected to the dewatering pin 6 and to be disconnected from the brake pin 4.

Alternatively, as shown in FIG. 4, the clutch device according to this embodiment includes the dewatering pin 6 mounted on the input shaft 1, the clutch sleeve 3 that is mounted on the input shaft sleeve 2 and rotates integrally with the input shaft sleeve, the brake pin 4 mounted at the lower end of the casing 15, and the drive unit that drives the clutch sleeve 3 to be connected to/disconnected from the dewatering pin 6 and the brake pin 4 separately.

In the washing state, the drive unit controls the clutch sleeve 3 to be connected to the brake pin 4 and to be disconnected from the dewatering pin 6, and in the dewatering state, the drive unit controls the clutch sleeve 3 to be connected to the dewatering pin 6 and to be disconnected from the brake pin 4.

The clutch sleeve 3 is upwardly and downwardly slidably mounted on the input shaft sleeve 2, and can rotate integrally with the input shaft sleeve. The drive unit controls the clutch sleeve 3 to upwardly and downwardly slide so as to be connected to or disconnected from splines of the dewatering pin 6 and the brake pin 4. The drive unit includes a return spring and a device that drives the clutch sleeve to act, and the device is an electromagnetic drive or a mechanical drive, for example, an electromagnetic clutch coil or a fork structure.

According to the washing machine in which the decelerating clutch of this embodiment is applied, switching between a washing mode and a dewatering mode is achieved by switching between connection and disconnection between the clutch sleeve 3 in the clutch device and the brake pin 4, the dewatering pin 6. When the clutch sleeve 3 is connected to the brake pin 4 and is disconnected from the dewatering pin 6, the washing machine is in the washing mode. In this case, the drive motor bidirectionally rotates repeatedly; power is transmitted by the input shaft 1 and the first gear mechanism A in a decelerating manner to the output shaft 13 to enable the output shaft 13 to rotate; and the output shaft 13 transfers power to the output shaft sleeve 12 in a decelerating manner by means of the second gear mechanism B, so as to achieve a repeated bidirectional rotation of the output shaft 13 and the output shaft sleeve 12. Specifically, in the washing state, because the clutch sleeve 3 is connected to the brake pin 4, the input shaft sleeve 2 is braked; the shared gear carrier 11 is fixed; the first gear mechanism A and the second gear mechanism B cannot perform revolution; the first sun gear 7 drives the first planetary gears 8 to perform rotation to drive the first inner tooth ring 9 to rotate; the output shaft 13 connected to the first inner tooth ring 9 rotates to drive an impeller to rotate; the output shaft 13 rotates to drive the second sun gear 19 to rotate, to drive the second planetary gears 16 to rotate; and rotation of the second planetary gears 16 drives the second inner tooth ring 17 to rotate, so that the gear case 5 and the output shaft sleeve 12 rotate to drive the inner drum and the impeller to rotate in opposite directions to each other.

When the clutch sleeve 3 is disconnected from the brake pin 4 and is connected to the dewatering pin 6, the washing machine is in the dewatering mode. In this case, the drive motor rotates unidirectionally according to a set direction. Because the clutch sleeve 3 is connected and locked to the dewatering pin 6, the input shaft 1, the input shaft sleeve 2, the first gear mechanism A, the second gear mechanism B, the output shaft 13, and the output shaft sleeve 12 are automatically combined as a whole, the dewatering mode is entered, and the inner drum is connected to the output shaft sleeve 12 and starts rotating to perform centrifugal dewatering.

### Embodiment 6

As shown in FIG. 5 and FIG. 6, this embodiment provides a novel washing machine decelerating clutch, including: an input shaft 1, an input shaft sleeve 2, a rolling bearing 103, an oil seal 104, a gear case 5, a gear mechanism, a connecting shaft 111, an output shaft sleeve 12, an output shaft 13, a braking arm 25, and a clutch device.

The input shaft sleeve 2 is movably connected to the gear case 5 by means of a fit of the rolling bearing 103; the output shaft sleeve 12 is fixedly connected to the gear case 5 by means of the connecting shaft 111 to form a rigid body; the gear mechanism is mounted in an inner cavity of the gear case 5; the input shaft 1, the gear case 5, and the output shaft 13 are connected to the gear mechanism; the input shaft sleeve 2 sleeves on the input shaft 1; the output shaft sleeve 12 sleeves on the output shaft 13; two rolling bearings 103 and one oil seal 104 are mounted at a position at which the gear case 5 accommodates a journal C of the input shaft sleeve; the rolling bearings 103 support the input shaft sleeve 2; and the rolling bearings 103 and the oil seal 104 play a role of sealing and leakage prevention on grease of the gear train in the inner cavity of the gear case.

The gear mechanism is composed of a first gear mechanism A and a second gear mechanism B; the first gear mechanism A is a decelerating transmission chain between the input shaft 1 and the output shaft 13; and the second gear mechanism B is a decelerating transmission chain with an opposite rotational direction between the output shaft 13 and the gear case 5, the output shaft sleeve 12. The gear mechanism is disposed in the inner cavity of the gear case 3, and not only includes a decelerating gear train that is unique to a traditional decelerating clutch between the input shaft 1 and the output shaft 13, but also includes a decelerating transmission chain with a changed opposite rotational direction between the output shaft 13 and the gear case 5, the output shaft sleeve 12. The clutch device is used for separation or combination between the input shaft 1 and the input shaft sleeve 2, and a brake band 26 is used for braking or releasing of the gear case 5 in a dewatering rotation direction (referring to FIG. 6).

The first gear mechanism A is mainly composed of a first sun gear 7, a first gear carrier cover 106, first planetary gear shafts 107, first planetary gears 8, a first inner tooth ring 9, and a first gear carrier 10; the first sun gear 7 is formed on the input shaft 1 by integrally pressing; the first planetary gears 8 are evenly distributed on a same circumference of the first gear carrier 10 and engage with the first inner tooth ring 9; the first inner tooth ring 9 is disposed in the inner cavity of the gear case 5; the first planetary gears 8 are movably fitted to the first planetary gear shafts 107; the first gear carrier 10 is connected to the output shaft 13 by means of a second sun gear 19; and the first gear carrier cover 106 is rivet-connected to the first gear carrier 10. The second gear mechanism B is mainly composed of a second gear carrier cover 114, second planetary gear shafts 115, second planetary gears 16, a second inner tooth ring 17, a second gear carrier 18, and the second sun gear 19. The second inner tooth ring 17 is fixedly mounted in the inner cavity of the gear case 5; the second sun gear 19 is fixedly mounted on the output shaft 13 and engages with the second planetary gears 16; the second planetary gears 16 are movably fitted to the second planetary gear shafts 115, and engage with the second inner tooth ring 17; the second planetary gear shafts 115 are mounted on the second gear carrier 18; the second planetary gears 16 and the second planetary gear shafts 115 are evenly distributed on a same circumference of the second gear carrier 18; and the second gear carrier cover 114 is rivet-connected to the second gear carrier 18. The first planetary gears 8 mounted on the first planetary gear shafts 107 engage with both the first sun gear 7 and the first inner tooth ring 9; the second planetary gears 16 mounted on the second planetary gear shafts 115 engage with both the second sun gear 19 and the second inner tooth ring 17; the input shaft sleeve 2 and the second gear carrier 18 are connected as a whole by means of the first inner tooth ring 9; a lower end of the first inner tooth ring 9 is connected to an upper end of the input shaft sleeve 2; and an upper end of the first inner tooth ring 9 is connected to a lower end of the second gear carrier 18. The first gear carrier 10 is connected to the output shaft 13 by means of the second sun gear 19; the second inner tooth ring 17 is disposed on the inner cavity of the gear case 5 and is fixedly connected to the gear case; and the output shaft sleeve 12 is fixedly connected to the gear case 5 by means of the connecting shaft 111 to form a rigid body.

For example, a plurality of grooves 31 is distributed on a lower end surface of the first inner tooth ring 9; bosses 32 corresponding to the grooves 31 are distributed on an upper end surface of the input shaft sleeve 2; and the input shaft sleeve 2 is fixedly connected to the grooves 31 on the lower end surface of the first inner tooth ring 9 by means of the bosses 32 (referring to FIG. 5). A position of the grooves and a position of the bosses of this structure are interchangeable, that is, bosses are distributed on the lower end surface of the first inner tooth ring 9, and grooves are distributed on the upper end surface of the input shaft sleeve 2. As shown in FIG. 6, a fifth spline 33 is disposed in an inner hole at the upper end of the first inner tooth ring 9; a sixth spline 34 is disposed on an outer circumference at the lower end of the second gear carrier 18; the first inner tooth ring 9 is fixedly spline-connected to the second gear carrier 18 by means of a fit of the fifth spline 33 and the sixth spline 34; the grooves are in one-to-one correspondence with the bosses; and preferably, number of grooves and number of bosses are 6 to 8. The above insert-connection manner between the grooves and the bosses may be replaced by other connection manners such as welding, rivet-connection, or spline-connection, and the spline-connection between the fifth spline and the sixth spline may also be replaced by connection manners such as welding, rivet-connection, or insert-connection, as long as the two do not rotate relative to each other.

As shown in FIG. 6, a clutch control mechanism includes a fork device 23 and a clutch spring 22; the clutch spring 22 sleeves an outer circumference of the input shaft sleeve 2, and is urged against a clutch component 21; the fork device 23 is mounted on a lower housing 29 in a hinged manner; and the clutch control mechanism synchronously controls connection and disconnection between the clutch component 21 and a positioning plate 30 and disconnection and connection between the clutch component 21 and a torque transmission sleeve 20, so as to implement switching between rotating in opposite directions to each other/rotating in a same direction of the output shaft sleeve 12 and the output shaft 13, that is, switching between a washing mode and a dewatering mode.

An end surface at one end of the torque transmission sleeve 20 close to the clutch component 21 is provided with a first spline 20a; an inner hole at the end of the torque transmission sleeve 20 close to the clutch component 21 is provided with a first internal spline 20b or a square-headed hole; an end surface at one end of the clutch component 21 close to the torque transmission sleeve 20 is provided with a second spline 21 a; an inner hole at the end of the clutch component 21 close to the torque transmission sleeve 20 is provided with a second internal spline 21b; an outer circumference at one end of the clutch component 21 close to the positioning plate 30 is provided with a third spline 21c; the positioning plate 30 is fixedly mounted at the bottom of the lower housing 29; an inner hole at one end of the positioning plate 30 close to the clutch component 21 is provided with a fourth spline 30a; a second external spline 102a is disposed on the input shaft sleeve 2; the first spline 20a of the torque transmission sleeve and the second spline 21 a of the clutch component are connected by movable fitting; the second internal spline 21b and the second external spline 102a are connected by movable fitting; the third spline 21c of the clutch component and the fourth spline 30a of the positioning plate are connected by movable fitting; and the first internal spline 20b and a first external spline 101b or a square head at a tail end of the input shaft 1 are connected by fitting. The first spline 20a of the torque transmission sleeve and the second spline 21a of the clutch component are connected by using internal and external splines or end surface splines, that is, the inner hole, the outer circumference, or the end surface at the end of the torque transmission sleeve 20 close to the clutch component 21 is provided with the first spline 20a, and the outer circumference, the inner hole, or the end surface at the end of the clutch component 21 close to the torque transmission sleeve 20 is provided with the second spline 21a corresponding to the first spline 20a. Similarly, the third spline 21c of the clutch component and the fourth spline 30a of the positioning plate may also be connected by using internal and external splines or end surface splines.

The clutch spring 22 sleeves the outer circumference of the input shaft sleeve 2, and is urged against the clutch component 21. The fork device 23 is fixedly mounted on the lower housing 29.

When the fork device 23 presses the clutch component 21, the clutch spring 22 is in a compressed state; the first spline 20a and the second spline 21a are in a separated state; the third spline 21c is connected to the fourth spline 30a; and in this case, the output shaft sleeve 12 and the output shaft 13 rotate in opposite directions to each other, that is, the washing machine is in the washing mode. When the fork device 23 leaves the clutch component 21, the clutch spring 22 ejects out the clutch component 21; the first spline 20a is connected to the second spline 21a; the third spline 21c is separated from the fourth spline 30a; and in this case, the output shaft sleeve 12 and the output shaft 13 rotate in a same direction, that is, the washing machine is in the dewatering mode.

In summary according to the present disclosure, when the washing machine is in an initial state, the fork device 23 releases the clutch component 21; the clutch spring 22 is in a returning state; and the clutch component 21, the input shaft sleeve 2, and the torque transmission sleeve 20 are connected together. When the washing machine is in the washing mode, the braking arm 25 continuously opens a first stroke and a second stroke, to drive the brake band 26 to release the gear case 5 and drive the fork device 23 to press the clutch component 21; the clutch spring 22 is in the compressed state; the first spline 20a and the second spline 21a are in the separated state, to separate the input shaft 1 from the input shaft sleeve 2; a motor operates at a low speed until the third spline 21c is connected to the fourth spline 30a of the positioning plate 30; in this case, the input shaft sleeve 2, the first inner tooth ring 9, and the second gear carrier 18 are fixed; when the input shaft 1 operates clockwise, the first gear mechanism A in the gear mechanism drives in a decelerating manner the output shaft 13 to rotate in a same direction, for example, clockwise; the output shaft 13 operates clockwise to drive the second sun gear 19 to operate clockwise; the second sun gear 19 drives the second planetary gears 16 to operate counterclockwise around the second planetary gear shafts 115; the second planetary gears 16 drive the second inner tooth ring 17 to operate counterclockwise; finally, the second inner tooth ring 17 drives the gear case 5 and the output shaft sleeve 12 to operate in a direction opposite to that of the output shaft 13, that is, counterclockwise; when the input shaft 1 operates counterclockwise, the output shaft 13 and the gear case 5 change to operate counterclockwise, and the output shaft sleeve 12 changes to operate clockwise; that is, when the input shaft 1 changes a rotational direction cyclically, the input shaft 1 drives the output shaft 13, the gear case 5, and the output shaft sleeve 12 to cyclically operate in corresponding directions, where a fixed differential speed ratio and rotational directions of the output shaft 13 and the gear case 5, the output shaft sleeve 12 are opposite to each other, so that an impeller fixedly connected to the output shaft 13 and an inner drum fixedly connected to the output shaft sleeve 12 rotate in a same way, so as to perform rubbing washing on laundry in a stable and ideal water flow, thereby improving a washing effect and a rate of washing ability, and reducing or even eliminating tangling of laundry. When the washing mode ends, the braking arm 25 returns to the initial state; the fork device 23 returns and leaves the clutch component 21; the motor operates at a low speed until the clutch spring 22 ejects out the clutch component 21; the first spline 20a is connected to the second spline 21a; the decelerating clutch returns to the initial state, and prepares for the dewatering mode. In the dewatering mode, the braking arm opens the first stroke; the brake band 26 keeps a state of releasing the gear case; a position of the fork device 23 remains unchanged; the first spline 20a and the second spline 21a are in a connected state; the input shaft 1 and the input shaft sleeve 2 are combined; the third spline 21c and the fourth spline 30a of the positioning plate 30 are in a separated state; and in this case, a whole movement including the input shaft 1, the input shaft sleeve 2, the gear case 5, the gear mechanism, the output shaft 13, the output shaft sleeve 12 and the like are combined as a whole. Under supporting effects of rolling bearings 24 and 27 in an upper housing 28 and the lower housing 29 as well as driving of the motor, the whole movement is driven to rotate clockwise at a high speed with a rotational speed of the input shaft, so that high efficient centrifugal dewatering is performed on the laundry in the inner drum, thereby meeting a requirement of a low water ratio. After dewatering is completed, the braking arm 25 returns to the initial state, and meanwhile, the brake band 26 holds the gear case 5 tight to brake the gear case 5, so that the inner drum and the whole movement slow down and then completely stop, so as to return to the initial state, and prepare for the washing mode.

Alternatively, the torque transmission sleeve 20 in the clutch device is mounted at one end of the gear case 5 close to the input shaft 1, and a structure of the torque transmission sleeve 20 is adjusted correspondingly according to a mounting position of the torque transmission sleeve 20. Because relative positions of the torque transmission sleeve 20, the clutch component 21, and the positioning plate 30 are changed, a clutch manner is changed correspondingly: when the fork device 23 presses down the clutch component 21, the clutch spring 22 is in the compressed state; the clutch component 21 is connected to the torque transmission sleeve 20, and is disconnected from the positioning plate 30; in this case, the output shaft sleeve 12 and the output shaft 13 rotate in a same direction, that is, the washing machine is in the dewatering mode; when the fork device 23 leaves the clutch component 21, the clutch spring 22 ejects out the clutch component 21; the clutch component 21 is disconnected from the torque transmission sleeve 20, and is connected to the positioning plate 30; and in this case, output shaft sleeve 12 and the output shaft 13 rotate in opposite directions to each other, that is, the washing machine is in the washing mode. Referring to FIG. 1, the clutch sleeve 3 in FIG. 1 is the clutch component 21 of this embodiment, the brake pin 4 in FIG. 1 is the positioning plate 30 of this embodiment, and the dewatering pin 6 in FIG. 1 is the torque transmission sleeve 20 of this embodiment.

### Embodiment 7

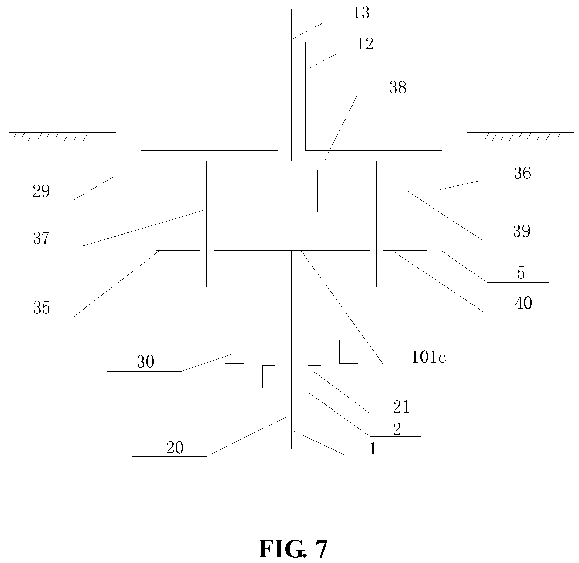

As shown in FIG. 7, a decelerating clutch of this embodiment is different from that of the foregoing embodiment in that: the gear mechanism changes from a dual gear mechanism to a duplex gear mechanism, and the duplex gear mechanism is not only a decelerating transmission chain between an input shaft 1 and an output shaft 13 but also a decelerating transmission chain with an opposite rotational direction between the output shaft 13 and a gear case 5, an output shaft sleeve 12.

The duplex gear mechanism is mainly composed of a third sun gear 101c, double-coupling planetary gears, a third inner tooth ring 35, a fourth inner tooth ring 36, double-coupling planetary gear shafts 37, and a duplex gear carrier 38. The double-coupling planetary gears each includes an upper gear 39 and a lower gear 40; the upper gear 39 and the lower gear 40 are coaxial and share the double-coupling planetary gear shaft 37; a first sun gear 1c is fixedly mounted on the input shaft 1; the lower gear 40 engages with both the first sun gear 1c and the third inner tooth ring 35; the upper gear 39 engages with the fourth inner tooth ring 36; the duplex gear carrier 38 and the output shaft 13 are connected as a whole; the fourth inner tooth ring 36 is fixedly mounted in an inner cavity of the gear case 5; and an input shaft sleeve 2 and the third inner tooth ring 35 are connected as a whole.

In addition to different gear trains adopted by the gear mechanism, the decelerating clutch of the present disclosure is different from similar domestic and foreign decelerating clutches in that: the output shaft sleeve 12 is fixedly connected to the gear case 5 by means of a connecting shaft 111 to form a rigid body; two rolling bearings 103 and one oil seal 104 are mounted at a position at which the gear case 5 accommodates a journal C of the input shaft sleeve; the rolling bearings 103 support the input shaft sleeve 2; the rolling bearings 103 and the oil seal 104 play a role of sealing and leakage prevention on grease of the gear train in the inner cavity of the gear case; and a novel fork clutch device is adopted. Therefore, system stiffness and a carrying capacity are greatly improved, and working reliability and a service life of the decelerating clutch are greatly improved.

### Embodiment 8

A washing machine according to the present disclosure includes an inner drum, an impeller for stirring laundry in the inner drum, a gear case 5 in which a gear mechanism is disposed, and a driving device for providing power to the inner drum and the impeller. Driven by the driving device, the inner drum and the impeller rotate in opposite directions to each other to stir the laundry. All of the foregoing structures are of the related art, and details are not described herein again. An improvement of a structure of the present disclosure is a force transmission relationship between the driving device and the impeller, the inner drum. Specifically, the gear case 5 is connected to the inner drum, and transmits the driving force of the driving device to the inner drum, and the gear mechanism in the gear case 5 is connected to the impeller, and transmits the driving force of the driving device to the impeller. The gear case 5 used in the washing machine of the present disclosure is the gear case in the foregoing embodiments.

As shown in FIG. 1 to FIG. 6, the washing machine further includes an input shaft 1 and an input shaft sleeve 2 that externally sleeves the input shaft 1; the input shaft sleeve 2 is connected to the gear mechanism; and the driving force of the driving device is transmitted to the gear mechanism by means of the input shaft 1. When the washing machine performs washing, the input shaft sleeve 2 is locked, and power input by the input shaft 1 is transmitted by means of the gear mechanism to an output shaft 13 and an output shaft sleeve 12 that is disposed integrally with the gear case 5, to drive the impeller and the inner drum to rotate separately.

The gear mechanism includes a first gear mechanism A and a second gear mechanism B; the first gear mechanism A includes a first inner tooth ring 9; the second gear mechanism B includes a second inner tooth ring 17; the gear case 5 is connected to only the second inner tooth ring 17 of the second gear mechanism B; and a gap is disposed between the first inner tooth ring 9 of the first gear mechanism A and the gear case 5, so that no torque is transmitted between the first inner tooth ring 9 and the gear case 5. The driving force of the driving device passes through the first gear mechanism A and the second gear mechanism B, and is transmitted by the second inner tooth ring 17 of the second gear mechanism B to the gear case 5.

The driving force of the driving device is transmitted to the output shaft 13 connected to the impeller and the second gear mechanism B in the gear mechanism after undergoing speed changing performed by the first gear mechanism A in the gear mechanism, and is transmitted to the gear case 5 after the second gear mechanism B changes a rotational direction of the driving force or performs decelerating on the driving force and changes the rotational direction.

The first gear mechanism A includes the first inner tooth ring 9 or a first gear carrier 10; the second gear mechanism B includes the second inner tooth ring 17; and the driving force of the driving device is transmitted by means of the first inner tooth ring 9 or the first gear carrier 10 to the output shaft 13 connected to the impeller and the second gear mechanism B, and is transmitted to the output shaft sleeve 12 connected to the inner drum by means of the second gear mechanism B and the gear case 5 that is connected to the second inner tooth ring 17 and rotates together with the second inner tooth ring 17.

Alternatively, the driving force of the driving device is transmitted to the second sun gear 19 of the second gear mechanism B by means of the first gear mechanism A; the second sun gear 19 transmits power to the output shaft 13; and power is transmitted to the gear case 5 by means of second planetary gears 16 and the second inner tooth ring 17 of the second gear mechanism B.

Further, as shown in FIG. 1 and FIG. 2, the driving force of the driving device is transmitted by means of a first sun gear 7, first planetary gears 8, and the first gear carrier 10 of the first gear mechanism A to the output shaft 13 connected to the impeller and the second sun gear 19 of the second gear mechanism B; the output shaft 13 drives the impeller to rotate along one direction; and the second sun gear 19 transmits force to the second inner tooth ring 17 by means of the second planetary gears 16, to drive the gear case 5 connected to the second inner tooth ring 17 to rotate, so as to drive the output shaft sleeve 12 and the inner drum that are successively connected to the gear case 5 to rotate along the other direction.

Alternatively, as shown in FIG. 3 and FIG. 4, the driving force of the driving device is transmitted by means of the first sun gear 7, the first planetary gears 8, and the first inner tooth ring 9 of the first gear mechanism A to the output shaft 13 connected to the impeller and the second sun gear 19 of the second gear mechanism B; the output shaft 13 drives the impeller to rotate along one direction; and the second sun gear 19 transmits force to the second inner tooth ring 17 by means of the second planetary gears 16, to drive the gear case 5 connected to the second inner tooth ring 17 to rotate, so as to drive the output shaft sleeve 12 and the inner drum that are connected to the gear case 5 to rotate along the other direction.

As shown in FIG. 1 and FIG. 5, the driving device further includes the input shaft 1 and the input shaft sleeve 2 that externally sleeves the input shaft 1, and the input shaft sleeve 2 is connected to the first gear mechanism A and the second gear mechanism B. When the input shaft sleeve 2 is locked, the second gear mechanism B is a fixed-axis gear train; the first inner tooth ring 9 of the first gear mechanism A is fixed; the first gear mechanism A is a planetary gear train; the input shaft 1 is transmitted to the output shaft 13 and the second sun gear 19 of the second gear mechanism B by means of the first sun gear 7, the first planetary gears 8, and the first gear carrier 10 of the first gear mechanism A; the second sun gear 19 transmits power to the second inner tooth ring 17 by means of the second planetary gears 16; and the second inner tooth ring 17 drives the gear case 5 to rotate together, so that power input by the input shaft 1 simultaneously drives the impeller and the inner drum to rotate in opposite directions to each other.

Alternatively, as shown in FIG. 3 and FIG. 4, when the input shaft sleeve 2 is locked, the first gear mechanism A is a fixed-axis gear train; the input shaft 1 is transmitted to the output shaft 13 and the second sun gear 19 of the second gear mechanism B by means of the first sun gear 7, the first planetary gears 8, and the first inner tooth ring 9 of the first gear mechanism A; the second sun gear 19 transmits power to the second inner tooth ring 17 by means of the second planetary gears 16; and the second inner tooth ring 17 drives the gear case 5 to rotate together, so that power input by the driving device simultaneously drives the impeller and the inner drum to rotate in opposite directions to each other.

The driving device in the washing machine of the present disclosure includes a motor and a belt transmission mechanism. The motor is connected to the input shaft by means of the belt transmission mechanism, or the driving device is a direct drive motor, and is directly connected to the input shaft.

The implementation schemes in the foregoing embodiments may be further combined or replaced, and the gear mechanism in the embodiments is only for describing the preferred embodiments of the present disclosure, but is not intended to limit the idea and scope of the present disclosure. Modifications and improvements made by persons skilled in the art to the technical solutions all fall within the protection scope of the present disclosure.

## Claims

1. A washing machine decelerating clutch, comprising an input shaft, an input shaft sleeve, a gear case, a gear mechanism, an output shaft sleeve, an output shaft, a lower housing, and a clutch device, wherein the input shaft sleeve sleeves on the input shaft; the output shaft sleeve sleeves on the output shaft; and the gear mechanism is mounted in an inner cavity of the gear case, **characterized in that**: the output shaft sleeve and the gear case are connected as a whole; the input shaft, the input shaft sleeve, the gear case, and the output shaft are connected to the gear mechanism; the gear mechanism is composed of a first gear mechanism and a second gear mechanism; the first gear mechanism is a decelerating transmission chain between the input shaft and the output shaft; the second gear mechanism is a decelerating transmission chain with an opposite rotational direction between the output shaft and the gear case, the output shaft sleeve; the input shaft sleeve and a gear carrier of the second gear mechanism are connected as a whole; and the clutch device comprises a positioning plate fixedly mounted on the lower housing, a torque transmission sleeve fixedly mounted on the input shaft, a clutch component that is mounted on the input shaft sleeve and is capable of being connected to/disconnected from the positioning plate and the torque transmission sleeve separately, and a clutch control mechanism that controls the clutch component to be connected to/disconnected from the positioning plate and the torque transmission sleeve.

2. The washing machine decelerating clutch according to claim 1, **characterized in that**: the output shaft is connected to the input shaft in a transmission way by means of the first gear mechanism, and the output shaft sleeve is connected to the output shaft in a transmission way by means of the gear case and the second gear mechanism.

3. The washing machine decelerating clutch according to claim 1 or 2, **characterized in that**: the first gear mechanism is mainly composed of a first sun gear, first planetary gear shafts, first planetary gears, a first inner tooth ring, and a first gear carrier; the first sun gear is mounted on the input shaft; the first inner tooth ring is disposed in the inner cavity of the gear case; the first planetary gears and the first planetary gear shafts movably fit, and are evenly distributed on a same circumference of the first gear carrier; the first planetary gears engage with both the first sun gear and the first inner tooth ring; and the output shaft is connected to the first gear carrier.

4. The washing machine decelerating clutch according to claim 3, **characterized in that**: the second gear mechanism is mainly composed of a second sun gear, second planetary gear shafts, second planetary gears, a second inner tooth ring, and a second gear carrier; the second inner tooth ring is fixedly mounted in the inner cavity of the gear case; the second sun gear is fixedly mounted on the output shaft; the second planetary gears and the second planetary gear shafts movably fit and are evenly distributed on a same circumference of the second gear carrier; the second planetary gears engage with both the second inner tooth ring and the second sun gear; and the input shaft sleeve is connected to the second gear carrier.

5. The washing machine decelerating clutch according to claim 4, **characterized in that**: the input shaft sleeve and the second gear carrier are connected as a whole by means of the first inner tooth ring, and the first gear carrier and the output shaft are connected as a whole by means of the second sun gear.

6. The washing machine decelerating clutch according to claim 1, **characterized in that**: the input shaft is connected to the first gear mechanism; the input shaft sleeve is connected to the second gear mechanism by means of the first gear mechanism; the output shaft is connected to the second gear mechanism; and the second gear mechanism is connected to the first gear mechanism in a transmission way.

7. The washing machine decelerating clutch according to claim 1 or 6, **characterized in that**: the first gear mechanism is mainly composed of a first sun gear, first planetary gear shafts, first planetary gears, a first inner tooth ring, and a first gear carrier; the first sun gear is mounted on the input shaft; the first inner tooth ring is disposed in the inner cavity of the gear case; the first planetary gears and the first planetary gear shafts movably fit, and are evenly distributed on a same circumference of the first gear carrier; the first planetary gears engage with both the first sun gear and the first inner tooth ring; and the first gear carrier is connected to the second gear mechanism.

8. The washing machine decelerating clutch according to claim 7, **characterized in that**: the second gear mechanism is mainly composed of a second sun gear, second planetary gear shafts, second planetary gears, a second inner tooth ring, and a second gear carrier; the second inner tooth ring is fixedly mounted in the inner cavity of the gear case; the second sun gear is fixedly mounted on the output shaft; the second planetary gears and the second planetary gear shafts movably fit and are evenly distributed on a same circumference of the second gear carrier; the second planetary gears engage with both the second inner tooth ring and the second sun gear; the input shaft sleeve is connected to the second gear carrier by means of the first inner tooth ring; the second sun gear is connected to the first gear carrier; and preferably, a lower end of the second sun gear is connected to the first gear carrier, and an upper end of the second sun gear engages with the second planetary gears.

9. The washing machine decelerating clutch according to claim 4 or 8, **characterized in that**: the second inner tooth ring is disposed on the inner cavity of the gear case and is fixedly connected to the gear case, and the output shaft sleeve is fixedly connected to the gear case by means of a connecting shaft to form a rigid body.

10. The washing machine decelerating clutch according to claim 4 or 8, **characterized in that**: number of both the first planetary gears and first planetary gear shafts evenly distributed on the same circumference of the first gear carrier is 2 to 4, and number of both the second planetary gears and second planetary gear shafts evenly distributed on the same circumference of the second gear carrier is 2 to 4.

11. The washing machine decelerating clutch according to claim 1, **characterized in that**: the clutch control mechanism comprises a fork device and a clutch spring; the clutch spring sleeves an outer circumference of the input shaft sleeve, and is urged against the clutch component; the fork device is mounted on the lower housing; and the clutch control mechanism synchronously controls connection and disconnection between the clutch component and the positioning plate as well as disconnection and connection between the clutch component and the torque transmission sleeve, so as to implement switching between rotating in opposite directions to each other/rotating in a same direction of the output shaft sleeve and the output shaft.

12. The washing machine decelerating clutch according to claim 1 or 11, **characterized in that**: the input shaft sleeve is mounted at one end of the gear case by means of the rolling bearing through rotatable fitting; the torque transmission sleeve is in linkage with the input shaft; the torque transmission sleeve is disposed adjacent to the input shaft sleeve; the clutch component sleeves the input shaft sleeve, and is slidably connected to the input shaft sleeve along an axial direction.

13. The washing machine decelerating clutch according to claim 12, **characterized in that**: one end of the torque transmission sleeve close to the clutch component is provided with a first spline; an inner hole at the end of the torque transmission sleeve close to the clutch component is provided with a first internal spline or a square-headed hole; one end of the clutch component close to the torque transmission sleeve is provided with a second spline; an inner hole at the end of the clutch component close to the torque transmission sleeve is provided with a second internal spline; one end of the clutch component close to the positioning plate is provided with a third spline; the positioning plate is fixedly mounted at a lower portion of the lower housing; one end of the positioning plate close to the clutch component is provided with a fourth spline; a second external spline is disposed on the input shaft sleeve; the first spline of the torque transmission sleeve and the second spline of the clutch component are connected by movable fitting; the second internal spline and the second external spline of the input shaft sleeve are connected by axially slidable fitting; the third spline of the clutch component and the fourth spline of the positioning plate are connected by movable fitting; and the first internal spline or the square-headed hole of the torque transmission sleeve and a first external spline or a square head at a tail end of the input shaft are connected by fitting.

14. The washing machine decelerating clutch according to claim 1, **characterized in that**: at least one rolling bearing and at least one oil seal are mounted at a position at which the gear case accommodates a journal of the input shaft sleeve.

15. The washing machine decelerating clutch according to claim 1, **characterized in that**: the torque transmission sleeve mounted on the input shaft is changed to be mounted at one end of the gear case close to the input shaft.

16. The washing machine decelerating clutch according to claim 1, **characterized in that**: the gear mechanism is changed to a duplex gear mechanism, and the duplex gear mechanism is not only a decelerating transmission chain between the input shaft and the output shaft but also a decelerating transmission chain with an opposite rotational direction between the output shaft and the gear case, the output shaft sleeve.

17. The washing machine decelerating clutch according to claim 16, **characterized in that**: the duplex gear mechanism is mainly composed of a third sun gear, double-coupling planetary gears, a third inner tooth ring, a fourth inner tooth ring, double-coupling planetary gear shafts, and a duplex gear carrier; the double-coupling planetary gears each comprises an upper gear and a lower gear; the first sun gear is fixedly mounted on the input shaft; the lower gear engages with both the first sun gear and the third inner tooth ring; the upper gear engages with the fourth inner tooth ring; the duplex gear carrier and the output shaft are connected as a whole; the fourth inner tooth ring is fixedly mounted in the inner cavity of the gear case; and the input shaft sleeve and the third inner tooth ring are connected as a whole.

18. A washing machine decelerating clutch, comprising: an input shaft, an input shaft sleeve, a gear case, a gear mechanism, an output shaft sleeve, an output shaft, a clutch device, and a casing, wherein the input shaft sleeve sleeves on the input shaft; the output shaft sleeve sleeves on the output shaft; and the gear mechanism is mounted in an inner cavity of the gear case, **characterized in that**: the input shaft, the input shaft sleeve, the gear case, and the output shaft are connected to the gear mechanism; the gear mechanism comprises a first gear mechanism and a second gear mechanism; the input shaft sleeve and a gear carrier of the second gear mechanism are connected as a whole; and the output shaft sleeve and the gear case are connected as a whole; in a washing state, the clutch device locks the input shaft sleeve, and controls the output shaft and the output shaft sleeve to rotate bidirectionally in opposite directions to each other; and in a dewatering state, the clutch device releases locking on the input shaft sleeve, and controls the output shaft and the output shaft sleeve to rotate unidirectionally in a same direction.

19. The washing machine decelerating clutch according to claim 18, **characterized in that**: the output shaft is connected to the input shaft in a transmission way by means of the first gear mechanism, and the output shaft sleeve is connected to the output shaft in a transmission way by means of the gear case and the second gear mechanism.

20. The washing machine decelerating clutch according to claim 18 or 19, **characterized in that**: the first gear mechanism is a decelerating transmission chain between the input shaft and the output shaft; and the second gear mechanism is a decelerating transmission chain with an opposite rotational directions between the output shaft and the gear case.

21. The washing machine decelerating clutch according to claim 20, **characterized in that**: the first gear mechanism is mainly composed of a first sun gear, a first inner tooth ring, first planetary gears, and a first gear carrier; the first sun gear is mounted on the input shaft; the first inner tooth ring is disposed in a chamber of the gear case; the first planetary gears are evenly distributed on a same circumference of the first gear carrier; the first planetary gears engage with both the first sun gear and the first inner tooth ring; and the output shaft and the first gear carrier are connected as a whole.

22. The washing machine decelerating clutch according to claim 21, **characterized in that**: the second gear mechanism is mainly composed of a second sun gear, a second inner tooth ring, second planetary gears, and a second gear carrier; the second inner tooth ring is fixedly mounted in the inner cavity of the gear case; the second sun gear is mounted on the output shaft; the second planetary gears are evenly distributed on a same circumference of the second gear carrier; the second planetary gears engage with both the second sun gear and the second inner tooth ring; and the input shaft sleeve and the second gear carrier are connected as a whole.

23. The washing machine decelerating clutch according to claim 18, **characterized in that**: the input shaft is connected to the first gear mechanism; the input shaft sleeve is connected to the second gear mechanism by means of the first gear mechanism; the output shaft is connected to the second gear mechanism; and the second gear mechanism is connected to the first gear mechanism in a transmission way.

24. The washing machine decelerating clutch according to claim 18 or 23, **characterized in that**: the first gear mechanism is mainly composed of a first sun gear, first planetary gear shafts, first planetary gears, a first inner tooth ring, and a first gear carrier; the first sun gear is mounted on the input shaft; the first inner tooth ring is disposed in the inner cavity of the gear case; the first planetary gears and the first planetary gear shafts movably fit, and are evenly distributed on a same circumference of the first gear carrier; the first planetary gears engage with both the first sun gear and the first inner tooth ring; and the first gear carrier is connected to the second gear mechanism.

25. The washing machine decelerating clutch according to claim 24, **characterized in that**: the second gear mechanism is mainly composed of a second sun gear, second planetary gear shafts, second planetary gears, a second inner tooth ring, and a second gear carrier; the second inner tooth ring is fixedly mounted in the inner cavity of the gear case; the second sun gear is fixedly mounted on the output shaft; the second planetary gears and the second planetary gear shafts movably fit, and are evenly distributed on a same circumference of the second gear carrier; the second planetary gears engage with both the second inner tooth ring and the second sun gear; the input shaft sleeve is connected to the second gear carrier by means of the first inner tooth ring; the second sun gear is connected to the first gear carrier; and preferably, a lower end of the second sun gear is connected to the first gear carrier, and an upper end of the second sun gear engages with the second planetary gears.

26. The washing machine decelerating clutch according to claim 18, **characterized in that**: the clutch device comprises a dewatering pin mounted at a lower end of the gear case, a clutch sleeve that is mounted on the input shaft sleeve and rotates integrally with the input shaft sleeve, a brake pin mounted at a lower end of the casing, and a drive unit that drives the clutch sleeve to be connected to/disconnected from the dewatering pin and the brake pin separately;
wherein
in the washing state, the drive unit controls the clutch sleeve to be connected to the brake pin and to be disconnected from the dewatering pin, and in the dewatering state, the drive unit controls the clutch sleeve to be connected to the dewatering pin and to be disconnected from the brake pin.

27. The washing machine decelerating clutch according to claim 18, **characterized in that**: the clutch device comprises a dewatering pin mounted on the input shaft, a clutch sleeve that is mounted on the input shaft sleeve and rotates integrally with the input shaft sleeve, a brake pin mounted at a lower end of the casing, and a drive unit that drives the clutch sleeve to be connected to/disconnected from the dewatering pin and the brake pin separately; wherein
in the washing state, the drive unit controls the clutch sleeve to be connected to the brake pin and to be disconnected from the dewatering pin, and in the dewatering state, the drive unit controls the clutch sleeve to be connected to the dewatering pin and to be disconnected from the brake pin.

28. A washing machine decelerating clutch, comprising: an input shaft, an input shaft sleeve, a gear case, a gear mechanism, an output shaft sleeve, an output shaft, a clutch device, and a casing, wherein the input shaft sleeve sleeves on the input shaft; the output shaft sleeve sleeves on the output shaft; and the gear mechanism is mounted in an inner cavity of the gear case, **characterized in that**: the input shaft, the input shaft sleeve, the gear case, and the output shaft are connected to the gear mechanism; the gear mechanism is a dual gear mechanism that shares a same gear carrier, and comprises a first gear mechanism and a second gear mechanism; the input shaft sleeve and the second gear mechanism are connected as a whole; the output shaft sleeve and the gear case are connected as a whole; the output shaft is connected to the input shaft in a transmission way by means of the first gear mechanism; and the output shaft sleeve is connected to the output shaft in a transmission way by means of the gear case and the second gear mechanism; in a washing state, the clutch device locks the input shaft sleeve, and controls the output shaft and the output shaft sleeve to rotate bidirectionally in opposite directions to each other; and in a dewatering state, the clutch device releases locking on the input shaft sleeve, and controls the output shaft and the output shaft sleeve to rotate unidirectionally in a same direction.

29. The washing machine decelerating clutch according to claim 28, **characterized in that**: the first gear mechanism is a decelerating transmission chain between the input shaft and the output shaft; the second gear mechanism is a decelerating transmission chain with an opposite rotational direction between the output shaft and the gear case.

30. The washing machine decelerating clutch according to claim 28, **characterized in that**: the first gear mechanism is mainly composed of a first sun gear, a first inner tooth ring, first planetary gears, and a gear carrier; the first sun gear is mounted on the input shaft; the first inner tooth ring is disposed in a chamber of the gear case; the first planetary gears are evenly distributed on a same circumference of the gear carrier; the first planetary gears engage with both the first sun gear and the first inner tooth ring; and the output shaft and the first inner tooth ring are connected as a whole.

31. The washing machine decelerating clutch according to claim 30, **characterized in that**: the second gear mechanism is mainly composed of a second sun gear, a second inner tooth ring, second planetary gears, and a gear carrier; the second inner tooth ring is fixedly mounted in the inner cavity of the gear case; the second sun gear is mounted on the output shaft; the second planetary gears are evenly distributed on a same circumference of the gear carrier; the second planetary gears engage with both the second sun gear and the second inner tooth ring; the gear carrier is a gear carrier shared by the first gear mechanism and the second gear mechanism; and the input shaft sleeve and the gear carrier are connected as a whole.

32. The washing machine decelerating clutch according to claim 28, **characterized in that**: the clutch device comprises a dewatering pin mounted at a lower end of the gear case, a clutch sleeve that is mounted on the input shaft sleeve and rotates integrally with the input shaft sleeve, a brake pin mounted at a lower end of the casing, and a drive unit that drives the clutch sleeve to be connected to/disconnected from the dewatering pin and the brake pin separately; and
in the washing state, the drive unit controls the clutch sleeve to be connected to the brake pin and to be disconnected from the dewatering pin, and in the dewatering state, the drive unit controls the clutch sleeve to be connected to the dewatering pin and to be disconnected from the brake pin.

33. The washing machine decelerating clutch according to claim 28, **characterized in that**: the clutch device comprises a dewatering pin mounted on the input shaft, a clutch sleeve that is mounted on the input shaft sleeve and rotates integrally with the input shaft sleeve, a brake pin mounted at a lower end of the casing, and a drive unit that drives the clutch sleeve to be connected to/disconnected from the dewatering pin and the brake pin separately; and
in the washing state, the drive unit controls the clutch sleeve to be connected to the brake pin and to be disconnected from the dewatering pin, and in the dewatering state, the drive unit controls the clutch sleeve to be connected to the dewatering pin and to be disconnected from the brake pin.

34. A washing machine decelerating clutch, comprising: an input shaft, an input shaft sleeve, an output shaft, an output shaft sleeve, a gear case, and a gear mechanism that is disposed in the gear case, wherein the output shaft sleeve sleeves on the output shaft; the input shaft sleeve sleeves on the input shaft, **characterized in that**: the input shaft, the input shaft sleeve, and the output shaft are connected to the gear mechanism; the output shaft sleeve is fixedly connected to the gear case; the gear case is connected to the gear mechanism; and in a washing state, the input shaft sleeve is locked, and the gear case and the output shaft sleeve rotate integrally in a direction opposite to a rotational direction of the output shaft.

35. A washing machine decelerating clutch, comprising: an input shaft, an input shaft sleeve, an output shaft, an output shaft sleeve, a gear case, and a gear mechanism that is disposed in the gear case and provides rotating torque for the output shaft and the output shaft sleeve during washing, **characterized in that**: the input shaft sleeve sleeves on the input shaft; the input shaft, the input shaft sleeve, and the output shaft are connected to the gear mechanism; the output shaft sleeve is fixedly connected to the gear case; and the gear case is connected to the gear mechanism.

36. The washing machine decelerating clutch according to claim 34 or 35, **characterized in that**: the gear mechanism comprises an inner tooth ring that outputs power; the inner tooth ring is connected to the gear case; and preferably, the gear mechanism comprises a first gear mechanism and a second gear mechanism, and an inner tooth ring of the second gear mechanism is connected to the gear case.

37. The washing machine decelerating clutch according to any one of claims 34 to 36, **characterized in that**: the gear mechanism comprises the first gear mechanism and the second gear mechanism; and the second gear mechanism is connected to the first gear mechanism by means of the output shaft, or the second gear mechanism is connected to the first gear mechanism by means of a second sun gear of the second gear mechanism.

38. The washing machine decelerating clutch according to any one of claims 34 to 37, **characterized in that**: the gear mechanism comprises the first gear mechanism and the second gear mechanism; the input shaft is connected to the first gear mechanism; and the input shaft sleeve is connected to both the first gear mechanism and the second gear mechanism, or the input shaft sleeve is connected to the second gear mechanism by means of the first gear mechanism.

39. The washing machine decelerating clutch according to any one of claims 34 to 38, **characterized in that**: the gear mechanism comprises the first gear mechanism and the second gear mechanism; the input shaft is connected to the first gear mechanism; and the output shaft is connected to the second gear mechanism, and the second gear mechanism is connected to the first gear mechanism; or the output shaft is connected to both the first gear mechanism and the second gear mechanism.

40. The washing machine decelerating clutch according to any one of claims 34 to 39, **characterized in that**: the gear mechanism comprises the first gear mechanism and the second gear mechanism; the input shaft is fixedly connected to a first sun gear of the first gear mechanism; the input shaft sleeve is connected to a first inner tooth ring of the first gear mechanism and a second gear carrier of the second gear mechanism; the output shaft is connected to the second sun gear of the second gear mechanism and a first gear carrier of the first gear mechanism; the gear case is connected to a second inner tooth ring of the second gear mechanism; and
preferably, the output shaft is connected to the second sun gear of the second gear mechanism, and the second sun gear of the second gear mechanism is connected to the first gear carrier of the first gear mechanism.

41. The washing machine decelerating clutch according to any one of claims 34 to 39, **characterized in that**: the gear mechanism comprises the first gear mechanism and the second gear mechanism; the input shaft is fixedly connected to a first sun gear of the first gear mechanism; the input shaft sleeve is connected to a gear carrier shared by the first gear mechanism and the second gear mechanism; the output shaft is connected to a second sun gear of the second gear mechanism and a first inner tooth ring of the first gear mechanism; and the gear case is connected to a second inner tooth ring of the second gear mechanism.

42. The washing machine decelerating clutch according to claim 40 or 41, **characterized in that**: the first sun gear of the first gear mechanism engages with first planetary gears; the first planetary gears engage with the first inner tooth ring; the second sun gear of the second gear mechanism engages with second planetary gears; and the second planetary gears engage with the second inner tooth ring.

43. The washing machine decelerating clutch according to any one of claims 34 to 42, **characterized in that**: the gear mechanism comprises the first gear mechanism and the second gear mechanism; the input shaft sleeve is connected to the first gear mechanism; and preferably, the input shaft sleeve is connected to the first inner tooth ring of the first gear mechanism.

44. The washing machine decelerating clutch according to any one of claims 34 to 43, **characterized in that**: a clutch component is slidably disposed on the input shaft sleeve; the clutch component locks the input shaft sleeve at a first position, and rotates together with the input shaft sleeve at a second position.

45. A washing machine decelerating clutch, comprising: an input shaft, an output shaft, and an output shaft sleeve, wherein the output shaft is connected to an impeller, and enables the impeller to rotate along one direction; and the output shaft sleeve is connected to an inner drum, and enables the inner drum to rotate along the other direction, **characterized in that**: the decelerating clutch further comprises a gear case in which a gear mechanism is disposed; and power input by the input shaft is transmitted by means of the gear mechanism to the output shaft and the output shaft sleeve that is disposed integrally with the gear case.

46. The washing machine decelerating clutch according to claim 45, **characterized in that**: the power input by the input shaft is transmitted to the output shaft sleeve by means of the gear case locally connected to the gear mechanism.

47. The washing machine decelerating clutch according to claim 45, **characterized in that**: the gear mechanism comprises an inner tooth ring; and the power input by the input shaft is transmitted to the output shaft sleeve by means of the gear case connected to the inner tooth ring.

48. The washing machine decelerating clutch according to any one of claims 45 to 47, **characterized by** further comprising an input shaft sleeve that externally sleeves the input shaft, wherein the input shaft sleeve is connected to the gear mechanism; and when the input shaft sleeve is locked, the power input by the input shaft is transmitted separately by means of the gear mechanism to the output shaft and the output shaft sleeve that is disposed integrally with the gear case, to drive the impeller and the inner drum to rotate separately.

49. The washing machine decelerating clutch according to any one of claims 45 to 48, **characterized in that**: the power input by the input shaft is transmitted to the output shaft and a second gear mechanism in the gear mechanism after undergoing speed changing by a first gear mechanism in the gear mechanism, and is transmitted to the gear case after the second gear mechanism changes a rotational direction or performs decelerating and changes the rotational direction.

50. The washing machine decelerating clutch according to claim 49, **characterized in that**: the power input by the input shaft is transmitted to a second sun gear of the second gear mechanism by means of the first gear mechanism; the second sun gear transmits power to the output shaft; and power is transmitted to the gear case by means of second planetary gears and a second inner tooth ring of the second gear mechanism.

51. The washing machine decelerating clutch according to claim 49 or 50, **characterized in that**: the first gear mechanism comprises a first inner tooth ring or a first gear carrier; the second gear mechanism comprises the second inner tooth ring; and the power input by the input shaft is transmitted by means of the first inner tooth ring or the first gear carrier to the output shaft and the second gear mechanism, and is transmitted to the output shaft sleeve by means of the second gear mechanism and the gear case that is connected to the second inner tooth ring and rotates together with the second inner tooth ring.

52. The washing machine decelerating clutch according to any one of claims 45 to 51, **characterized in that**: the power input by the input shaft is transmitted to the output shaft and the second sun gear of the second gear mechanism by means of a first sun gear, first planetary gears, and the first gear carrier of the first gear mechanism; the output shaft drives the impeller to rotate along one direction; and the second sun gear transmits power to the second inner tooth ring by means of the second planetary gears, to drive the gear case connected to the second inner tooth ring to rotate, so as to drive the output shaft sleeve and the inner drum that are connected to the gear case to rotate along the other direction;
alternatively, the power input by the input shaft is transmitted to the output shaft and the second sun gear of the second gear mechanism by means of the first sun gear, the first planetary gears, and the first inner tooth ring of the first gear mechanism; the output shaft drives the impeller to rotate along one direction; and the second sun gear transmits power to the second inner tooth ring by means of the second planetary gears, to drive the gear case connected to the second inner tooth ring to rotate, so as to drive the output shaft sleeve and the inner drum that are connected to the gear case to rotate along the other direction.

53. The washing machine decelerating clutch according to any one of claims 45 to 52, **characterized by** further comprising the input shaft sleeve that externally sleeves the input shaft, wherein the input shaft sleeve is connected to the first gear mechanism and the second gear mechanism; when the input shaft sleeve is locked, the second gear mechanism is a fixed-axis gear train; the first inner tooth ring of the first gear mechanism is fixed; the first gear mechanism is a planetary gear train; the input shaft is transmitted to the output shaft and the second sun gear of the second gear mechanism by means of the first sun gear, the first planetary gears, and the first gear carrier of the first gear mechanism; the second sun gear transmits power to the second inner tooth ring by means of the second planetary gears; and the second inner tooth ring drives the gear case to rotate together, so that the power input by the input shaft simultaneously drives the impeller and the inner drum to rotate in opposite directions to each other;
alternatively, when the input shaft sleeve is locked, the first gear mechanism is a fixed-axis gear train; the input shaft is transmitted to the output shaft and the second sun gear of the second gear mechanism by means of the first sun gear, the first planetary gears, and the first inner tooth ring; the second sun gear transmits power to the second inner tooth ring by means of the second planetary gears; and the second inner tooth ring drives the gear case to rotate together, so that the power input by the input shaft simultaneously drives the impeller and the inner drum to rotate in opposite directions to each other.

54. The washing machine decelerating clutch according to any one of claims 51 to 53, **characterized in that**: a gap is disposed between the first inner tooth ring and the gear case, so that no torque is transmitted between the first inner tooth ring and the gear case.

55. A washing machine comprising the washing machine decelerating clutch according to any one of claims 1 to 54, comprising an outer drum for containing water, an inner drum coaxially disposed in the outer drum and for placing clothing, and an impeller and a drive motor that are coaxially disposed at bottom of the inner drum, **characterized in that**: the input shaft is connected to the drive motor; the output shaft is connected to the impeller; and the output shaft sleeve is connected to the inner drum; during washing, the decelerating clutch performs decelerating transmission, so that the impeller and the inner drum rotate bidirectionally in opposite directions to each other; and during dewatering, the impeller and the inner drum rotate unidirectionally in a same direction at a same speed.

56. A washing machine, comprising an inner drum, an impeller for stirring laundry in the inner drum, a gear case in which a gear mechanism is disposed, and a driving device for providing power to the inner drum and the impeller, wherein driven by the driving device, the inner drum and the impeller rotate in opposite directions to each other to stir the laundry, **characterized in that**: the gear case is connected to the inner drum, and transmits a driving force of the driving device to the inner drum, and the gear mechanism in the gear case is connected to the impeller, and transmits the driving force of the driving device to the impeller.

57. The washing machine according to claim 56, **characterized in that**: the gear case is locally connected to the gear mechanism, and transmits the driving force of the driving device to the inner drum.

58. The washing machine according to claim 56, **characterized in that**: the gear case comprises an inner tooth ring, and the inner tooth ring is connected to the gear case, and transmits the driving force of the driving device to the inner drum.

59. The washing machine according to any one of claims 56 to 58, **characterized by** further comprising an input shaft and an input shaft sleeve that externally sleeves the input shaft; the input shaft sleeve is connected to the gear mechanism; the driving force of the driving device is transmitted to the gear mechanism by means of the input shaft; and when the input shaft sleeve is locked, power input by the input shaft is transmitted by means of the gear mechanism to an output shaft and an output shaft sleeve that is disposed integrally with the gear case, to drive the impeller and the inner drum to rotate separately.

60. The washing machine according to any one of claims 56 to 59, **characterized in that**: the driving force of the driving device is transmitted to the output shaft connected to the impeller and a second gear mechanism in the gear mechanism after undergoing speed changing by a first gear mechanism in the gear mechanism, and is transmitted to the gear case after the second gear mechanism changes a rotational direction or performs decelerating and changes the rotational direction.

61. The washing machine according to claim 60, **characterized in that**: the driving force of the driving device is transmitted to a second sun gear of the second gear mechanism by means of the first gear mechanism; the second sun gear transmits power to the output shaft; and power is transmitted to the gear case by means of second planetary gears and a second inner tooth ring of the second gear mechanism.

62. The washing machine according to claim 60 or 61, **characterized in that**:
the first gear mechanism comprises a first inner tooth ring or a first gear carrier;
the second gear mechanism comprises a second inner tooth ring; and the driving force of the driving device is transmitted by means of the first inner tooth ring or the first gear carrier to the output shaft connected to the impeller and the second gear mechanism, and is transmitted to the output shaft sleeve connected to the inner drum by means of the second gear mechanism and the gear case that is connected to the second inner tooth ring and rotates together with the second inner tooth ring.

63. The washing machine according to any one of claims 56 to 62, **characterized in that**: the driving force of the driving device is transmitted by means of a first sun gear, first planetary gears, and the first gear carrier of the first gear mechanism to the output shaft connected to the impeller and the second sun gear of the second gear mechanism; the output shaft drives the impeller to rotate along one direction; and the second sun gear transmits force to the second inner tooth ring by means of the second planetary gears, to drive the gear case connected to the second inner tooth ring to rotate, so as to drive the output shaft sleeve and the inner drum that are successively connected to the gear case to rotate along the other direction;
alternatively, the driving force of the driving device is transmitted by means of the first sun gear, the first planetary gears, and the first inner tooth ring of the first gear mechanism to the output shaft connected to the impeller and the second sun gear of the second gear mechanism; the output shaft drives the impeller to rotate along one direction; and the second sun gear transmits force to the second inner tooth ring by means of the second planetary gears, to drive the gear case connected to the second inner tooth ring to rotate, so as to drive the output shaft sleeve and the inner drum that are connected to the gear case to rotate along the other direction.

64. The washing machine according to any one of claims 56 to 63, **characterized in that**: the driving device further comprises the input shaft and the input shaft sleeve that externally sleeves the input shaft, and the input shaft sleeve is connected to the first gear mechanism and the second gear mechanism; when the input shaft sleeve is locked, the second gear mechanism is a fixed-axis gear train; the first inner tooth ring of the first gear mechanism is fixed; the first gear mechanism is a planetary gear train; the input shaft is transmitted to the output shaft and the second sun gear of the second gear mechanism by means of the first sun gear, the first planetary gears, and the first gear carrier of the first gear mechanism; the second sun gear transmits power to the second inner tooth ring by means of the second planetary gears; and the second inner tooth ring drives the gear case to rotate together, so that the power input by the input shaft simultaneously drives the impeller and the inner drum to rotate in opposite directions to each other;
alternatively, when the input shaft sleeve is locked, the first gear mechanism is a fixed-axis gear train; the input shaft is transmitted to the output shaft and the second sun gear of the second gear mechanism by means of the first sun gear, the first planetary gears, and the first inner tooth ring of the first gear mechanism; the second sun gear transmits power to the second inner tooth ring by means of the second planetary gears; and the second inner tooth ring drives the gear case to rotate together, so that power input by the driving device simultaneously drives the impeller and the inner drum to rotate in opposite directions to each other.

65. The washing machine according to any one of claims 62 to 64, **characterized in that**: a gap is disposed between the first inner tooth ring and the gear case, so that no torque is transmitted between the first inner tooth ring and the gear case.
